(19) Europäisches Patentamt
European Patent Office
Office européen des brevets

(11) EP 2 651 066 B1

(12) **EUROPEAN PATENT SPECIFICATION**

(45) Date of publication and mention of the grant of the patent:
**15.05.2019 Bulletin 2019/20**

(21) Application number: **11839681.1**

(22) Date of filing: **08.11.2011**

(51) Int Cl.:
***H04L 1/06*** *(2006.01)*
***H04B 7/0456*** *(2017.01)*
***H04L 1/00*** *(2006.01)*
***H04B 7/06*** *(2006.01)*
***H04L 25/03*** *(2006.01)*

(86) International application number:
**PCT/CN2011/081927**

(87) International publication number:
**WO 2012/062199 (18.05.2012 Gazette 2012/20)**

(54) **CHANNEL STATE INFORMATION TRANSMISSION METHOD AND EQUIPMENT**

VERFAHREN ZUR MELDUNG VON KANALQUALITÄTSINFORMATIONEN UND VORRICHTUNG DAFÜR

MÉTHODE ET ÉQUIPEMENT DE TRANSMISSION D'INFORMATIONS D'ÉTATS DU CANAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2010 CN 201010539050**

(43) Date of publication of application:
**16.10.2013 Bulletin 2013/42**

(73) Proprietor: **Datang Mobile Communications Equipment Co., Ltd**
**Beijing 100083 (CN)**

(72) Inventors:
- **ZHANG, Ranran**
  **Beijing 100083 (CN)**
- **GAO, Qiubin**
  **Beijing 100083 (CN)**
- **JING, Meifang**
  **Beijing 100083 (CN)**
- **TAMRAKAR, Rakesh**
  **Beijing 100083 (CN)**
- **XIAO, Guojun**
  **Beijing 100083 (CN)**

(74) Representative: **Dennemeyer & Associates S.A.**
**Postfach 70 04 25**
**81304 München (DE)**

(56) References cited:
**CN-A- 101 807 981**
**CN-A- 101 867 461**
**CN-A- 102 082 639**

- **HUAWEI ET AL: "Down-sampling C1 and/or C2 for PUCCH Mode 1-1 in Rel.10", 3GPP DRAFT; R1-105249 DOWNSAMPLING C1 AND C2 FOR PUCCH 1-1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450433, [retrieved on 2010-10-05]**
- **CATT: "Subsampling of 8Tx codebooks", 3GPP DRAFT; R1-105165, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450383, [retrieved on 2010-10-05]**
- **ZTE: "Further Discussion on CSI Reporting mode", 3GPP DRAFT; R1_105449_V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi' an, China; 201010, 14 October 2010 (2010-10-14), XP050489286, [retrieved on 2010-10-14]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 651 066 B1

- "3rd Generation Partnership Project; Technical Specification Group Radio Access Network; Evolved Universal Terrestrial Radio Access (E-UTRA); Physical layer procedures (Release 9)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.0, 17 September 2010 (2010-09-17) , pages 1-80, XP050442094, [retrieved on 2010-09-17]

## Description

### Field

The present invention relates to the field of communication technology, in particular to the method for transmitting channel state information and device thereof.

### Background

In a Multiple-Input Multiple-Output (MIMO) system, if a transmitter is able to be somehow informed of the channel information, the optimization on the transmitted signal can be available according to channel characteristics so as to improve the quality of receiving and reduce complexity requirements on the receiver. The feedback for channel information is usually achieved by the way of quantifying channel information in actual systems, so as to reduce feedback overhead, thus improving transmission efficiency of the system.

In Long Term Evolved (LTE) system, a codebook-based implicit Channel State Information (CSI) feedback method is adopted. User Equipment (UE, namely, terminal equipment) measures the downlink channels based on pilots and reports Rank Indication (RI) that downlink can support and Precoding Matrix Indicator (PMI) to a base station according to its own receiving processing algorithm. Meanwhile, UE further needs to report Channel Quality Indicator (CQI) of each codeword. Therein, during the calculation of CQI, UE assumes that the base station uses its recommended RI/PMI.

In LTE system, PMI is defined as follows:

For 2 antenna ports {0, 1} and corresponding RI value which is 1, the PMI value $n \in \{0,1,2,3\}$ shall correspond to the codebook index n in $\upsilon = 1$ in the Table 1 below (a corresponding relationship of pre-coding matrix indicator information in LTE system with the codebook index in the codebook for 2 antenna ports);

For 2 antenna ports {0, 1} and corresponding RI value which is 2, the PMI value $n \in \{0,1\}$ shall correspond to the codebook index $n$ +1 in $\upsilon = 2$ in Table 1 below;

For 4 antenna ports {0, 1, 2, 3} and corresponding RI value which is 2, the PMI value $n \in \{0,1,\cdots,15\}$ shall correspond to the codebook index $n$ in $\upsilon$ =RI value in the below Table 2 (a corresponding relationship of pre-coding matrix indicator information in LTE system with the codebook index in the codebook for 4 antenna ports).

Background art is: HUAWEI ET AL, "Down-sampling C1 and/or C2 for PUCCH Mode 1-1 in Rel.10", 3GPP DRAFT; R1-105249 DOWNSAMPLING C1 AND C2 FOR PUCCH 1-1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, (20101005), vol. RAN WG1, no. Xi'an; 20101011, which relates to finding a down-sampled Rel.10 codebook for PUCCH mode 1-1; CATT, "Subsampling of 8Tx codebooks", 3GPP DRAFT; R1-105165, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20101005), vol. RAN WG1, no. Xi'an; 20101011, which relates to investigating subsampling of 8Tx codebooks; and ZTE, "Further Discussion on CSI Reporting mode", 3GPP DRAFT; R1_105449_V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, (20101014), vol. RAN WG1, no. Xi' an, China; 201010, which relates to DL MU-MIMO CSI feedback reporting.

Table 1

| **Codebook index** | **Rank** | |
|---|---|---|
| | **1** | **2** |
| 0 | $\frac{1}{\sqrt{2}}\begin{bmatrix}1\\1\end{bmatrix}$ | $\frac{1}{\sqrt{2}}\begin{bmatrix}1&0\\0&1\end{bmatrix}$ |
| 1 | $\frac{1}{\sqrt{2}}\begin{bmatrix}1\\-1\end{bmatrix}$ | $\frac{1}{2}\begin{bmatrix}1&1\\1&-1\end{bmatrix}$ |

(continued)

| Codebook index | Rank | |
|---|---|---|
| | 1 | 2 |
| 2 | $\frac{1}{\sqrt{2}}\begin{bmatrix}1\\j\end{bmatrix}$ | $\frac{1}{2}\begin{bmatrix}1 & 1\\j & -j\end{bmatrix}$ |
| 3 | $\frac{1}{\sqrt{2}}\begin{bmatrix}1\\-j\end{bmatrix}$ | - |

Table 2

| Codebook index | $u_n$ | Rank $\upsilon$ | | | |
|---|---|---|---|---|---|
| | | **1** | **2** | **3** | **4** |
| 0 | $u_0 = [1\ -1\ -1\ -1]^T$ | $W_0^{\{1\}}$ | $W_0^{\{14\}}/\sqrt{2}$ | $W_0^{\{124\}}/\sqrt{3}$ | $W_0^{\{1234\}}/2$ |
| 1 | $u_1 = [1\ -j\ 1\ j]^T$ | $W_1^{\{1\}}$ | $W_1^{\{12\}}/\sqrt{2}$ | $W_1^{\{123\}}/\sqrt{3}$ | $W_1^{\{1234\}}/2$ |
| 2 | $u_2 = [1\ 1\ -1\ 1]^T$ | $W_2^{\{1\}}$ | $W_2^{\{12\}}/\sqrt{2}$ | $W_2^{\{123\}}/\sqrt{3}$ | $W_2^{\{3214\}}/2$ |
| 3 | $u_3 = [1\ j\ 1\ -j]^T$ | $W_3^{\{1\}}$ | $W_3^{\{12\}}/\sqrt{2}$ | $W_3^{\{123\}}/\sqrt{3}$ | $W_3^{\{3214\}}/2$ |
| 4 | $u_4 = \left[1 \quad (-1-j)/\sqrt{2} \quad -j \quad (1-j)/\sqrt{2}\right]^T$ | $W_4^{\{1\}}$ | $W_4^{\{14\}}/\sqrt{2}$ | $W_4^{\{124\}}/\sqrt{3}$ | $W_4^{\{1234\}}/2$ |
| 5 | $u_5 = \left[1 \quad (1-j)/\sqrt{2} \quad j \quad (-1-j)/\sqrt{2}\right]^T$ | $W_5^{\{1\}}$ | $W_5^{\{14\}}/\sqrt{2}$ | $W_5^{\{124\}}/\sqrt{3}$ | $W_5^{\{1234\}}/2$ |
| 6 | $u_6 = \left[1 \quad (1+j)/\sqrt{2} \quad -j \quad (-1+j)/\sqrt{2}\right]^T$ | $W_6^{\{1\}}$ | $W_6^{\{13\}}/\sqrt{2}$ | $W_6^{\{134\}}/\sqrt{3}$ | $W_6^{\{1324\}}/2$ |
| 7 | $u_7 = \left[1 \quad (-1+j)/\sqrt{2} \quad j \quad (1+j)/\sqrt{2}\right]^T$ | $W_7^{\{1\}}$ | $W_7^{\{13\}}/\sqrt{2}$ | $W_7^{\{134\}}/\sqrt{3}$ | $W_7^{\{1324\}}/2$ |
| 8 | $u_8 = [1\ -1\ 1\ 1]^T$ | $W_8^{\{1\}}$ | $W_8^{\{12\}}/\sqrt{2}$ | $W_8^{\{124\}}/\sqrt{3}$ | $W_8^{\{1234\}}/2$ |
| 9 | $u_9 = [1\ -j\ -1\ -j]^T$ | $W_9^{\{1\}}$ | $W_9^{\{14\}}/\sqrt{2}$ | $W_9^{\{134\}}/\sqrt{3}$ | $W_9^{\{1234\}}/2$ |
| 10 | $u_{10} = [1\ 1\ 1\ -1]^T$ | $W_{10}^{\{1\}}$ | $W_{10}^{\{13\}}/\sqrt{2}$ | $W_{10}^{\{123\}}/\sqrt{3}$ | $W_{10}^{\{1324\}}/2$ |
| 11 | $u_{11} = [1\ j\ -1\ j]^T$ | $W_{11}^{\{1\}}$ | $W_{11}^{\{13\}}/\sqrt{2}$ | $W_{11}^{\{134\}}/\sqrt{3}$ | $W_{11}^{\{1324\}}/2$ |
| 12 | $u_{12} = [1\ -1\ -1\ 1]^T$ | $W_{12}^{\{1\}}$ | $W_{12}^{\{12\}}/\sqrt{2}$ | $W_{12}^{\{123\}}/\sqrt{3}$ | $W_{12}^{\{1234\}}/2$ |
| 13 | $u_{13} = [1\ -1\ 1\ -1]^T$ | $W_{13}^{\{1\}}$ | $W_{13}^{\{13\}}/\sqrt{2}$ | $W_{13}^{\{123\}}/\sqrt{3}$ | $W_{13}^{\{1324\}}/2$ |

(continued)

| Codebook index | $u_n$ | Rank $\upsilon$ | | | |
|---|---|---|---|---|---|
| | | 1 | 2 | 3 | 4 |
| 14 | $u_{14}$ = [1 1 -1 -1]$^T$ | $W_{14}^{\{1\}}$ | $W_{14}^{\{13\}}/\sqrt{2}$ | $W_{14}^{\{123\}}/\sqrt{3}$ | $W_{14}^{\{3214\}}/2$ |
| 15 | $u_{15}$ = [1 1 1 1]$^T$ | $W_{15}^{\{1\}}$ | $W_{15}^{\{12\}}/\sqrt{2}$ | $W_{15}^{\{123\}}/\sqrt{3}$ | $W_{15}^{\{1234\}}/2$ |

Wherein, $W_n = I - 2u_n u_n^H / u_n^H u_n$ , I refers to unit matrix of dimension 4×4, $u_n^H$ represents the conjugate transpose of $u_n$.

In Long Time Evolved Advanced (LTE-A) system, the codebook-based implicit CSI feedback method is further adopted. In order to improve the accuracy of PMI feedback, in LTE-A, a pre-coding matrix (W) is formed by merging two matrixes (W1 and W2); W1 and W2 are indicated by two PMIs respectively (the first PMI value, corresponding to W1; and the second PMI value, corresponding to W2).

The codebook in LTE version R8/9 is still used in 2 antenna ports and 4 antenna ports; W1 is defined as a unit matrix, while the first PMI value contains 0 bit of information, no feedback is required. Specifically, the corresponding relationship of pre-coding matrix indicator information in LTE-A system with the codebook index in the codebook for 8 antenna ports is shown in Table 3 to Table 10.

Table 3 refers to codebook for 1-layer CSI reporting using antenna ports 15 to 22 (the codebook for 1-layer CSI reporting using 8 antenna ports (ports 15 to 22)), namely, Rank 1 codebook for 8 antenna ports in LTE-A system.

Table 3

| $i_1$ | $i_2$ | | | |
|---|---|---|---|---|
| | **0** | **1** | **2** | **3** |
| 0 - 15 | $W^{(1)}_{2i_1,0}$ | $W^{(1)}_{2i_1,1}$ | $W^{(1)}_{2i_1,2}$ | $W^{(1)}_{2i_1,3}$ |
| $i_1$ | $i_2$ | | | |
| | **4** | **5** | **6** | **7** |
| 0 - 15 | $W^{(1)}_{2i_1+1,0}$ | $W^{(1)}_{2i_1+1,1}$ | $W^{(1)}_{2i_1+1,2}$ | $W^{(1)}_{2i_1+1,3}$ |
| $i_1$ | $i_2$ | | | |
| | **8** | **9** | **10** | **11** |
| 0 - 15 | $W^{(1)}_{2i_1+2,0}$ | $W^{(1)}_{2i_1+2,1}$ | $W^{(1)}_{2i_1+2,2}$ | $W^{(1)}_{2i_1+2,3}$ |
| $i_1$ | $i_2$ | | | |
| | **12** | **13** | **14** | **15** |
| 0 - 15 | $W^{(1)}_{2i_1+3,0}$ | $W^{(1)}_{2i_1+3,1}$ | $W^{(1)}_{2i_1+3,2}$ | $W^{(1)}_{2i_1+3,3}$ |
| Therein | $W^{(1)}_{m,n} = \frac{1}{\sqrt{8}}\begin{bmatrix} v_m \\ \varphi_n v_m \end{bmatrix}$ | | | |

Table 4 refers to Codebook for 2-layer CSI reporting using antenna ports 15 to 22 (the codebook for 2-layer CSI reporting using 8 antenna ports (ports 15 to 22)), namely, Rank2 codebook for 8 antenna ports in LTE-A system.

Table 4

| $i_1$ | $i_2$ | | | |
|---|---|---|---|---|
| | **0** | **1** | **2** | **3** |
| 0 - 15 | $W^{(2)}_{2i_1,2i_1,0}$ | $W^{(2)}_{2i_1,2i_1,1}$ | $W^{(2)}_{2i_1+1,2i_1+1,0}$ | $W^{(2)}_{2i_1+1,2i_1+1,1}$ |
| $i_1$ | $i_2$ | | | |
| | **4** | **5** | **6** | **7** |
| 0 - 15 | $W^{(2)}_{2i_1+2,2i_1+2,0}$ | $W^{(2)}_{2i_1+2,2i_1+2,1}$ | $W^{(2)}_{2i_1+3,2i_1+3,0}$ | $W^{(2)}_{2i_1+3,2i_1+3,1}$ |

(continued)

| $i_1$ | $i_2$ | | | |
|---|---|---|---|---|
| | **8** | **9** | **10** | **11** |
| 0 - 15 | $W^{(2)}_{2i_1,2i_1+1,0}$ | $W^{(2)}_{2i_1,2i_1+1,1}$ | $W^{(2)}_{2i_1+1,2i_1+2,0}$ | $W^{(2)}_{2i_1+1,2i_1+2,1}$ |
| **12** | **13** | **14** | **15** | |
| 0 - 15 | $W^{(2)}_{2i_1,2i_1+3,0}$ | $W^{(2)}_{2i_1,2i_1+3,1}$ | $W^{(2)}_{2i_1+1,2i_1+3,0}$ | $W^{(2)}_{2i_1+1,2i_1+3,1}$ |
| Therein | $W^{(2)}_{m,m',n} = \frac{1}{4}\begin{bmatrix} v_m & v_{m'} \\ \varphi_n v_m & -\varphi_n v_{m'} \end{bmatrix}$ | | | |

Table 5 refers to Codebook for 3-layer CSI reporting using antenna ports 15 to 22 (the codebook for 3-layer CSI reporting using 8 antenna ports (ports 15 to 22)), namely, Rank 3 codebook for 8 antenna ports in LTE-A system.

Table 5

| $i_1$ | $i_2$ | | | |
|---|---|---|---|---|
| | **0** | **1** | **2** | **3** |
| 0 - 3 | $W^{(3)}_{8i_1,8i_1,8i_1+8}$ | $W^{(3)}_{8i_1+8,8i_1,8i_1+8}$ | $\widetilde{W}^{(3)}_{8i_1,8i_1+8,8i_1+8}$ | $\widetilde{W}^{(3)}_{8i_1+8,8i_1,8i_1}$ |
| $i_1$ | $i_2$ | | | |
| | **4** | **5** | **6** | **7** |
| 0 - 3 | $W^{(3)}_{8i_1+2,8i_1+2,4i_1+10}$ | $W^{(3)}_{8i_1+10,8i_1+2,8i_1+10}$ | $\widetilde{W}^{(3)}_{8i_1+2,8i_1+10,8i_1+10}$ | $\widetilde{W}^{(3)}_{8i_1+10,8i_1+2,8i_1+2}$ |
| $i_1$ | $i_2$ | | | |
| | **8** | **9** | **10** | **11** |
| 0 - 3 | $W^{(3)}_{8i_1+4,8i_1+4,8i_1+12}$ | $W^{(3)}_{8i_1+12,8i_1+4,8i_1+12}$ | $\widetilde{W}^{(3)}_{8i_1+4,8i_1+12,8i_1+12}$ | $\widetilde{W}^{(3)}_{8i_1+12,8i_1+4,8i_1+4}$ |
| $i_1$ | $i_2$ | | | |
| | **12** | **13** | **14** | **15** |
| 0 - 3 | $W^{(3)}_{8i_1+6,8i_1+6,8i_1+14}$ | $W^{(3)}_{8i_1+14,8i_1+6,8i_1+14}$ | $\widetilde{W}^{(3)}_{8i_1+6,8i_1+14,8i_1+14}$ | $\widetilde{W}^{(3)}_{8i_1+14,8i_1+6,8i_1+6}$ |
| Therein | $W^{(3)}_{m,m',m''} = \frac{1}{\sqrt{24}}\begin{bmatrix} v_m & v_{m'} & v_{m''} \\ v_m & -v_{m'} & -v_{m''} \end{bmatrix},\quad \widetilde{W}^{(3)}_{m,m',m''} = \frac{1}{\sqrt{24}}\begin{bmatrix} v_m & v_{m'} & v_{m''} \\ v_m & v_{m'} & -v_{m''} \end{bmatrix}$ | | | |

Table 6 refers to Codebook for 4-layer CSI reporting using antenna ports 15 to 22 (the codebook for 4-layer CSI reporting using 8 antenna ports (ports 15 to 22)), namely, Rank 4 codebook for 8 antenna ports in LTE-A system.

Table 6

| $i_1$ | $i_2$ | | | |
|---|---|---|---|---|
| | **0** | **1** | **2** | **3** |
| 0 - 3 | $W^{(4)}_{8i_1,8i_1+8,0}$ | $W^{(4)}_{8i_1,8i_1+8,1}$ | $W^{(4)}_{8i_1+2,8i_1+10,0}$ | $W^{(4)}_{8i_1+2,8i_1+10,1}$ |

(continued)

| $i_1$ | $i_2$ | | | |
|---|---|---|---|---|
| | **4** | **5** | **6** | **7** |
| 0 - 3 | $W^{(4)}_{8i_1+4,8i_1+12,0}$ | $W^{(4)}_{8i_1+4,8i_1+12,1}$ | $W^{(4)}_{8i_1+6,8i_1+14,0}$ | $W^{(4)}_{8i_1+6,8i_1+14,1}$ |
| Therein | $W^{(4)}_{m,m',n}=\frac{1}{\sqrt{32}}\begin{bmatrix} v_m & v_{m'} & v_m & v_{m'} \\ \varphi_n v_m & \varphi_n v_{m'} & -\varphi_n v_m & -\varphi_n v_{m'} \end{bmatrix}$ | | | |

Table 7 refers to Codebook for 1-layer CSI reporting using antenna ports 15 to 22 (the codebook for 5-layer CSI reporting using 8 antenna ports (ports 15 to 22)), namely, Rank 5 codebook for 8 antenna ports in LTE-A system.

Table 7

| $i_1$ | $i_2$ |
|---|---|
| | **0** |
| 0 - 3 | $W^{(5)}_{i_1}=\frac{1}{\sqrt{40}}\begin{bmatrix} v_{2i_1} & v_{2i_1} & v_{2i_1+8} & v_{2i_1+8} & v_{2i_1+16} \\ v_{2i_1} & -v_{2i_1} & v_{2i_1+8} & -v_{2i_1+8} & v_{2i_1+16} \end{bmatrix}$ |

Table 8 refers to Codebook for 1-layer CSI reporting using antenna ports 15 to 22 (the codebook for 6-layer CSI reporting using 8 antenna ports (ports 15 to 22)), namely, Rank 6 codebook for 8 antenna ports in LTE-A system.

Table 8

| $i_1$ | $i_2$ |
|---|---|
| | **0** |
| 0 - 3 | $W^{(6)}_{i_1}=\frac{1}{\sqrt{48}}\begin{bmatrix} v_{2i_1} & v_{2i_1} & v_{2i_1+8} & v_{2i_1+8} & v_{2i_1+16} & v_{2i_1+16} \\ v_{2i_1} & -v_{2i_1} & v_{2i_1+8} & -v_{2i_1+8} & v_{2i_1+16} & -v_{2i_1+16} \end{bmatrix}$ |

Table 9 refers to Codebook for 1-layer CSI reporting using antenna ports 15 to 22 (the codebook for 7-layer CSI reporting using 8 antenna ports (ports 15 to 22)), namely, Rank 7 codebook for 8 antenna ports in LTE-A system.

Table 9

| $i_1$ | $i_2$ |
|---|---|
| | **0** |
| 0 - 3 | $W^{(7)}_{i_1}=\frac{1}{\sqrt{56}}\begin{bmatrix} v_{2i_1} & v_{2i_1} & v_{2i_1+8} & v_{2i_1+8} & v_{2i_1+16} & v_{2i_1+16} & v_{2i_1+24} \\ v_{2i_1} & -v_{2i_1} & v_{2i_1+8} & -v_{2i_1+8} & v_{2i_1+16} & -v_{2i_1+16} & v_{2i_1+24} \end{bmatrix}$ |

Table 10 refers to Codebook for 1-layer CSI reporting using antenna ports 15 to 22 (the codebook for 8-layer CSI reporting using 8 antenna ports (ports 15 to 22)), namely, Rank 8 codebook for 8 antenna ports in LTE-A system.

Table 10

| $i_1$ | $i_2$ |
|---|---|
| | **0** |
| 0 | $W^{(8)}_{i_1}=\frac{1}{8}\begin{bmatrix} v_{2i_1} & v_{2i_1} & v_{2i_1+8} & v_{2i_1+8} & v_{2i_1+16} & v_{2i_1+16} & v_{2i_1+24} & v_{2i_1+24} \\ v_{2i_1} & -v_{2i_1} & v_{2i_1+8} & -v_{2i_1+8} & v_{2i_1+16} & -v_{2i_1+16} & v_{2i_1+24} & -v_{2i_1+24} \end{bmatrix}$ |

In the above tables, $\varphi_n = e^{j\pi n/2}$, $v_m = [1\ e^{j2\pi m/32}\ e^{j4\pi m/32}\ e^{j6\pi m/32}]^T$, therein, $(\cdot)^T$ represents matrix transpose.

In the case of no codebook compression, PMI is defined as follows:

For 8 antenna ports and corresponding RI value which is 1, the first PMI value $i_1 \in \{0,1,2,\cdots,15\}$ shall correspond to the codebook index $i_1$ in Table 3 and the second PMI value $i_2 \in \{0,1,2,\cdots,15\}$ shall correspond to the codebook index $i_2$ in Table 3.

For 8 antenna ports and corresponding RI value which is 2, the first PMI value $i_1 \in \{0,1,2,\cdots,15\}$ shall correspond to the codebook index $i_1$ in Table 4 and the second PMI value $i_2 \in \{0,1,2,\cdots,15\}$ shall correspond to the codebook index $i_2$ in Table 4.

For 8 antenna ports and corresponding RI value which is 3, the first PMI value $i_1 \in \{0,1,2,3\}$ shall correspond to the codebook index $i_1$ in Table 5 and the second PMI value $i_2 \in \{0,1,2,\cdots,15\}$ shall correspond to the codebook index $i_2$ in Table 5.

For 8 antenna ports and corresponding RI value which is 4, the first PMI value $i_1 \in \{0,1,2,3\}$ shall correspond to the codebook index $i_1$ in Table 6 and the second PMI value $i_2 \in \{0,1,2,\cdots,15\}$ shall correspond to the codebook index $i_2$ in Table 6.

For 8 antenna ports and corresponding RI value which is 5, the first PMI value $i_1 \in \{0,1,2,3\}$ shall correspond to the codebook index $i_1$ in Table 3 and the second PMI value $i_2 \in \{0\}$ shall correspond to the codebook index $i_2$ in Table 7.

For 8 antenna ports and corresponding RI value which is 6, the first PMI value $i_1 \in \{0,1,2,3\}$ shall correspond to the codebook index $i_1$ in Table 4 and the second PMI value $i_2 \in \{0\}$ shall correspond to the codebook index $i_2$ in Table 8.

For 8 antenna ports and corresponding RI value which is 7, the first PMI value $i_1 \in \{0,1,2,3\}$ shall correspond to the codebook index $i_1$ in Table 5 and the second PMI value $i_2 \in \{0\}$ shall correspond to the codebook index $i_2$ in Table 9.

For 8 antenna ports and corresponding RI value which is 8, the first PMI value $i_1 \in \{0\}$ shall correspond to the codebook index $i_1$ in Table 6 and the second PMI value $i_2 \in \{0\}$ shall correspond to the codebook index $i_2$ in Table 10.

LTE-A system supports PUCCH reporting mode 1-1 for 8 antenna ports to achieve the feedback for RI, wideband PMI and wideband CQI. At present, there are two PUCCH reporting mode 1-1, respectively, referred to as submode 1 and submode 2. In submode 2, RI is reported on an individual sub-frame, the first PMI, the wideband second PMI and the wideband CQI is needed to be reported in a sub-frame; the Uplink Control Information (UCI) domain that first PMI, wideband second PMI and wideband CQI report may be shown in Table 11 or Table 12.

Table 11

| Domain | The number of bits | | | | | |
|---|---|---|---|---|---|---|
| | 2 antenna ports | | 4 antenna ports | | 8 antenna ports | |
| | Rank = 1 | Rank = 2 | Rank = 1 | Rank > 1 | Rank = 1 | Rank > 1 |
| wideband CQI | 4 | 4 | 4 | 4 | 4 | 4 |
| Spatial differencing CQI | 0 | 3 | 0 | 3 | 0 | 3 |
| The first PMI value | - | - | - | - | TBD | TBD |
| The wideband second PMI value | 2 | **1** | 4 | 4 | TBD | TBD |

Table 12

| Domain | The number of bits | | | | | |
|---|---|---|---|---|---|---|
| | 2 antenna ports | | 4 antenna ports | | 8 antenna ports | |
| | Rank = 1 | Rank = 2 | Rank = 1 | Rank > 1 | Rank = 1 | Rank > 1 |
| wideband CQI | 4 | 4 | 4 | 4 | 4 | 4 |
| Spatial differencing CQI | 0 | 3 | 0 | 3 | 0 | 3 |
| wideband PMI | 2 | 1 | 4 | 4 | TBD | TBD |

TBD refers that it is not defined in current standard.

The total number of the bits in the domain cannot exceed 11. For 8 antenna ports:

When Rank=1, a total of 8 bits are required for the first PMI value and the second PMI value in Table 3, and there will be 12 bits in total plus 4 bits of wideband CQI, beyond 11 bits.

When Rank=2, a total of 8 bits are required for the first PMI value and the second PMI value in Table 4, and there will be 15 bits in total plus 4 bits of wideband CQI and 3 bits of spatial differencing CQI, beyond 11 bits.

When Rank=3, a total of 6 bits are required for the first PMI value and the second PMI value in Table 5, and there will be 13 bits in total plus 4 bits of wideband CQI and 3 bits of spatial differencing CQI, beyond 11 bits.

When Rank=4, a total of 5 bits are required for the first PMI value and the second PMI value in Table 6, and there will be 12 bits in total plus 4 bits of wideband CQI and 3 bits of spatial differencing CQI, beyond 11 bits.

LTE-A system further supports PUCCH reporting mode 2-1 for 8 antenna ports to achieve the feedback for the RI, the wideband first PMI, the wideband second PMI and the feedback for CQI or RI, the wideband second PMI, wideband CQI, the sub-band second PMI and sub-band CQI based on Precorder Type Indication (PTI); the uplink control information domain that wideband PMI and wideband CQI report is shown in Table 13.

Table 13

| Domain | The number of bits | | | | | | | | | |
|---|---|---|---|---|---|---|---|---|---|---|
| | 8 antenna ports | | | | | | | | | |
| | Rank = 1 | | Rank = 2, 3 | | Rank = 4 | | Rank = 5, 6, 7 | | Rank = 8 | |
| | PTI=0 | PTI=1 | PTI=0 | PTI=1 | PTI=0 | PTI=1 | PTI=0 | PTI=1 | PTI=0 | PTI=1 |
| **wideband CQI** | 4 | 0 | 4 | 0 | 4 | 0 | 4 | 0 | 4 | 0 |
| **sub-band CQI** | 0 | 4 | 0 | 4 | 0 | 4 | 0 | 4 | 0 | 4 |
| **Spatial differencing CQI** | 0 | 0 | 3 | 3 | 3 | 3 | 3 | 3 | 3 | 3 |
| **Wideband i2** | 4 | 0 | 4 | 0 | 3 | 0 | 0 | 0 | 0 | 0 |
| **Sub-band i2** | 0 | 4 | 0 | 2 | 0 | 2 | 0 | 0 | 0 | 0 |
| **Sub-band label** | 0 | 1 or 2 | 0 | 1 or 2 | 0 | 1 or 2 | 0 | 1 or 2 | 0 | 1 or 2 |

The total number of the bits in the domain cannot exceed 11. For 8 antenna ports:
When Rank=2, a total of 4 bits are required for the second PMI value in Table 4, and there will be 13 bits in total plus 4 bits of sub-band CQI, 3 bits of spatial differencing CQI and at most 2 bits of sub-band location indicator, beyond 11 bits.

When Rank=3, a total of 4 bits are required for the second PMI value in Table 5, and there will be 13 bits in total plus 4 bits of sub-band CQI, 3 bits of spatial differencing CQI and at most 2 bits of sub-band location indicator, beyond 11 bits.

When Rank=4, a total of 3 bits are required for the second PMI value in Table 6, and there will be 12 bits in total plus 4 bits of sub-band CQI, 3 bits of spatial differencing CQI and at most 2 bits of sub-band location indicator, beyond 11 bits.

Codebook compression shall be required for all situations mentioned above; in case of codebook compression, the relationship of the first PMI value and the wideband second PMI value with the codebook indexes $i_1$ and $i_2$ shall be redefined. Currently, no relationship definition of the first PMI value and the wideband second PMI value with the codebook indexes $i_1$ and $i_2$ or that of PMI with the codebook indexes $i_1$ and $i_2$ after codebook compression is provided.

In the procedure of realizing the objects of the present disclosure, at least the following problems existing in the current technologies were found:
At present, no relationship definition of the first PMI value and the wideband second PMI value with the codebook indexes $i_1$ and $i_2$ or that of PMI with the codebook indexes $i_1$ and $i_2$ after codebook compression is provided.

**Summary**

The invention is defined by the independent claims. Advantageous embodiments are described in the dependent claims. While several embodiments and/or examples are disclosed in this description, the subject matter for which protection is sought is strictly and solely limited to those embodiments and/ or examples encompassed by the scope of the appended claims. Embodiments and/or examples mentioned in the description that do not fall under the scope of the claims are useful for understanding the invention. The examples of the present disclosure put forward the method for transmitting channel state information and device thereof, so as to solve the problem of no corresponding relationship definition of the pre-coding matrix indicator information with the codebook index after codebook compression provided in the current technologies. Aspects of the invention are defined in the appended claims.

To achieve the above purpose, the examples of the present disclosure put forward a method for transmitting channel state information, which comprising:

receiving, by a terminal equipment, a control signaling sent by base station, the control signaling informs the terminal equipment that channel state information feedback is needed and feedback mode to be used by the channel state information feedback;
determining, by the terminal equipment, Rank Indication (RI) value and pre-coding matrix in compressed pre-coding matrix set and determining the value of corresponding pre-coding matrix indicator information according to preset corresponding relationship of the pre-coding matrix indicator information with codebook index in source codebook;
sending, by the terminal equipment, the determined RI value and the value of pre-coding matrix indicator information to the base station as per the feedback mode.

Moreover, the examples of the present disclosure further put forward a terminal equipment, which comprising:

a receiving module, used to receive control signaling sent by base station, the control signaling informs the terminal equipment that channel state information feedback is needed and feedback mode to be used by the channel state information feedback;
a setting module, used to set a corresponding relationship of pre-coding matrix indicator information with codebook index in the source codebook;
a determination module, used to determine the RI value and pre-coding matrix in compressed pre-coding matrix set and determining the value of the corresponding pre-coding matrix indicator information according to the RI value and the corresponding relationship of the pre-coding matrix indicator information with the codebook index in the source codebook set by the setting module;
a sending module, used to send the RI value and the value of pre-coding matrix indicator information determined by the determination module to the base station as per the feedback mode informed in the control signaling that receiving module receives.

Moreover, the examples of the present disclosure further put forward a method for transmitting channel state information, which comprising:

sending, by a base station, a control signaling to terminal equipment to inform the terminal equipment that channel state information feedback is needed and feedback mode to be used by the channel state information feedback;

receiving, by the base station, RI and pre-coding matrix indicator information that the terminal equipment reports as per the feedback mode;

determining, by the base station, a pre-coding matrix according to preset corresponding relationship of pre-coding matrix indicator information with codebook index in source codebook according to the received RI value and value of the pre-coding matrix indicator information.

Moreover, the examples of the present disclosure further provide a base station, which comprising:

a setting module, used to set a corresponding relationship of the pre-coding matrix indicator information with the codebook index in the source codebook;

a sending module, used to send control signaling to terminal equipment to inform the terminal equipment that channel state information feedback is needed and feedback mode to be used by the channel state information feedback;

a receiving module, used to receivie RI and pre-coding matrix indicator information that terminal equipment reports as per the feedback mode that the sending module informs;

a determination module, used to determine a pre-coding matrix according to corresponding relationship of pre-coding matrix indicator information with the codebook index in the source codebook that setting module sets according to the RI value and the value of pre-coding matrix indicator information that the receiving module receives.

Compared with the present technology, the examples of the present disclosure possess the following advantages:
By applying the technical schemes of the examples of the present disclosure , in a LTE-A system using PUCCH reporting mode 1-1 submode 2 and PUCCH reporting mode 2-1, in a LTE-A system using PUCCH reporting mode 1-1, in a situation where PMI feedback for 8 antenna ports is needed to be reported in a sub-frame and PUCCH capacity is limited, therefore codebook compression is required,a corresponding relationship definition of the pre-coding matrix indicator information or the pre-coding matrix indicator information pair and the codebook index or the codebook index pair after codebook compression is provided, thus realizing the feedback and receiving of channel state information between a base station and terminal equipment.

## Brief Description of the Drawings

Fig.1 is the flow diagram of the method for transmitting channel state information provided in the embodiment of the present invention at the terminal equipment;

Fig.2 is the flow diagram of method for transmitting channel state information provided in the embodiment of the present invention at the base station;

Fig.3 is the structure diagram of the terminal equipment provided in the embodiment of the present invention;

Fig.4 is the structure diagram of the base station provided in the embodiment of the present invention.

## Detailed Description of the Embodiments of the Present Invention

Based on the deficiencies of the current technical schemes referred in the background of the present invention, the embodiments of the present invention provide the channel state information transmission scheme; by applying this technical scheme, the feedback and receiving of channel state information between a base station and terminal equipment can be realized in the application scene using PUCCH reporting mode 1-1 submode 2 and PUCCH reporting mode 2-1.

As shown in Fig.1, it refers to the flow diagram of the method for transmitting channel state information provided in the embodiments of the present invention, which comprises the following specific steps:

Step S101, the terminal equipment receives a control signaling sent by base station.

The control signaling informs the terminal equipment that channel state information feedback is needed and feedback mode to be used by the channel state information feedback;

As for the application scene applied in the embodiments of the present invention, before step S101, the terminal equipment further receives the broadcast information sent by base station and is informed that current base station is configured with 8 antenna ports.

Step S102, the terminal equipment determines the RI value and pre-coding matrix in the compressed pre-coding matrix set and determines the value of corresponding pre-coding matrix indicator information according to the preset corresponding relationship of pre-coding matrix indicator information with the codebook index in the source codebook.

It should be noted that, in actual application scene, the above source codebook refers to the codebook for 8 antenna ports in LTE-A system, to be specific; similar cases may happen in the later description of the embodiments of the present invention, while such name change will not affect the scope of the patent protection of the present invention. In the meantime, to simplify description, the illustration of the source codebook here shall be referred in the later description of the present invention and will not be described.

In actual application scene, the specific implementation of the step comprises the following four conditions:

Condition I, when the pre-coding matrix indicator information that terminal equipment determines specifically comprises the first pre-coding matrix indicator information and the second pre-coding matrix indicator information, the terminal equipment determines the value of the first pre-coding matrix indicator information and the second pre-coding matrix indicator information according to the RI value and the preset corresponding relationship of the first pre-coding matrix indicator information and the second pre-coding matrix indicator information with the two codebook indexes $i_1$ and $i_2$ in the source codebook.

In actual application scene, depending on RI value, the corresponding relationship in the condition comprises the following specific types:

(1) When the RI value that terminal equipment determines is 1, the above corresponding relationship specifically comprises:

The value of the first pre-coding matrix indicator information $i_1 \in \{0,1,\cdots,7\}$ corresponds to the codebook index $\lfloor i_1/2 \rfloor$ in the Rank 1 source codebook, and the value of the second pre-coding matrix indicator information $i_2 \in \{0,1,\cdots,15\}$ corresponds to the codebook index $i_2$ in the Rank 1 source codebook; or,

The value of the first pre-coding matrix indicator information $i_1 \in \{0,1,\cdots,7\}$ corresponds to the codebook index $2i_1$ in the Rank 1 source codebook, and the value of the second pre-coding matrix indicator information $i_2 \in \{0,1,\cdots,15\}$ corresponds to the codebook index $i_2$ in the Rank 1 source codebook; or,

The value of the first pre-coding matrix indicator information $i_1 \in \{0,1,\cdots,15\}$ corresponds to the codebook index $i_1$ in the Rank 1 source codebook, and the value of the second pre-coding matrix indicator information $i_2 \in \{0,1,\cdots,7\}$ corresponds to the codebook index $i_2$ in the Rank 1 source codebook; or,

The value of the first pre-coding matrix indicator information $i_1 \in \{0,1,\cdots,15\}$ corresponds to the codebook index $i_1$ in the Rank 1 source codebook, when the value of the second pre-coding matrix indicator information is $i_2 \in \{0,1,2,3\}$, the value of the second pre-coding matrix indicator information corresponds to the codebook index $i_2$ in the Rank 1 source codebook, and when the value of the second pre-coding matrix indicator information is $i_2 \in \{4,5,6,7\}$, the value of the second pre-coding matrix indicator information corresponds to codebook index $i_1 + 8$ in the Rank 1 source codebook; or,

The value of the first pre-coding matrix indicator information $i_1 \in \{0,1,\cdots,15\}$ corresponds to the codebook index $i_1$ in the Rank 1 source codebook, and the value of the second pre-coding matrix indicator information $i_2 \in \{0,1,\cdots,7\}$ corresponds to the codebook index $i_2 + 4$ in the Rank 1 source codebook; or,

The value of the first pre-coding matrix indicator information $i_1 \in \{0,1,\cdots,15\}$ corresponds to the codebook index $i_1$ in the Rank 1 source codebook, and the value of the second pre-coding matrix indicator information $i_2 \in \{0,1,\cdots,7\}$ corresponds to the codebook index $i_2 + 8$ in the Rank 1 source codebook; or,

The value of the first pre-coding matrix indicator information $i_1 \in \{0,1,\cdots,7\}$ corresponds to the codebook index $\lfloor i_1/2 \rfloor$ in the Rank 1 source codebook, and the value of the second pre-coding matrix indicator information $i_2 \in \{0,1\}$ corresponds to the codebook index $2i_2$ in the Rank 1 source codebook; or,

The value of the first pre-coding matrix indicator information $i_1 \in \{0,1,\cdots,7\}$ corresponds to the codebook index $2i_1$ in the Rank 1 source codebook, and the value of the second pre-coding matrix indicator information $i_2 \in \{0,1\}$ corresponds to the codebook index $2i_2$ in the Rank 1 source codebook; or,

The value of the first pre-coding matrix indicator information $i_1 \in \{0,1,\cdots,7\}$ corresponds to the codebook index $\lfloor i_1/2 \rfloor$ in the Rank 1 source codebook, and the value of the second pre-coding matrix indicator information $i_2 \in \{0,1\}$ corresponds to the codebook index $2i_2 + 4$ in the Rank 1 source codebook; or,

The value of the first pre-coding matrix indicator information $i_1 \in \{0,1,\cdots,7\}$ corresponds to the codebook index $2i_1$ in the Rank 1 source codebook, and the value of the second pre-coding matrix indicator information $i_2 \in \{0,1\}$ corresponds to the codebook index $2i_2 + 4$ in the Rank 1 source codebook; or,

The value of the first pre-coding matrix indicator information $i_1 \in \{0,1,\cdots,7\}$ corresponds to the codebook index $\lfloor i_1/2 \rfloor$ in the Rank 1 source codebook, and the value of the second pre-coding matrix indicator information $i_2 \in \{0,1\}$ corresponds to the codebook index $2i_2 + 8$ in the Rank 1 source codebook; or,

The value of the first pre-coding matrix indicator information $i_1 \in \{0,1,\cdots,7\}$ corresponds to the codebook index $2i_1$ in the Rank 1 source codebook, and the value of the second pre-coding matrix indicator information $i_2 \in \{0,1\}$ corresponds to the codebook index $2i_2 + 8$ in the Rank 1 source codebook; or,

The value of the first pre-coding matrix indicator information $i_1 \in \{0,1,\cdots,7\}$ corresponds to the codebook index $\lfloor i_1/2 \rfloor$ in the Rank 1 source codebook, and the value of the second pre-coding matrix indicator information $i_2 \in \{0,1\}$ corresponds to the codebook index $2i_2 + 12$ in the Rank 1 source codebook; or,

The value of the first pre-coding matrix indicator information $i_1 \in \{0,1,\cdots,7\}$ corresponds to the codebook index $2i_1$ in the Rank 1 source codebook, and the value of the second pre-coding matrix indicator information $i_2 \in \{0,1\}$ corresponds to the codebook index $2i_2 + 12$ in the Rank 1 source codebook; or,

The value of the first pre-coding matrix indicator information $i_1 \in \{0,1,\cdots,7\}$ corresponds to the codebook index $\lfloor i_1/2 \rfloor$ in the Rank 1 source codebook, when the value of the second pre-coding matrix indicator information is $i_2 \in \{0,1\}$, the value of the second pre-coding matrix indicator information corresponds to the codebook index

$2i_2$ in the Rank 1 source codebook, and when the value of the second pre-coding matrix indicator information is $i_2 \in \{3,4\}$, the value of the second pre-coding matrix indicator information corresponds to the codebook index $2i_2 + 5$ in the Rank 1 source codebook; or,

The value of the first pre-coding matrix indicator information $i_1 \in \{0,1,\cdots,7\}$ corresponds to the codebook index $2i_1$ in the Rank 1 source codebook, when the value of the second pre-coding matrix indicator information is $i_2 \in \{0,1\}$, the value of the second pre-coding matrix indicator information corresponds to the codebook index $2i_2$ in the Rank 1 source codebook, and when the value of the second pre-coding matrix indicator information is $i_2 \in \{3,4\}$, the value of the second pre-coding matrix indicator information corresponds to the codebook index $2i_2 + 5$ in the Rank 1 source codebook; or,

The value of the first pre-coding matrix indicator information $i_1 \in \{0,1,\cdots,15\}$ corresponds to the codebook index $i_1$ in the Rank 1 source codebook, and the value of the second pre-coding matrix indicator information $i_2 \in \{0,1\}$ corresponds to the codebook index $2i_2$ in the Rank 1 source codebook; or,

The value of the first pre-coding matrix indicator information $i_1 \in \{0,1,\cdots,15\}$ corresponds to the codebook index $i_1$ in the Rank 1 source codebook, and the value of the second pre-coding matrix indicator information $i_2 \in \{0,1\}$ corresponds to the codebook index $8 + 2i_2$ in the Rank 1 source codebook; or,

The value of the first pre-coding matrix indicator information $i_1 \in \{0,1,\cdots,7\}$ corresponds to the codebook index $\lfloor i_1/2 \rfloor$ in the Rank 1 source codebook, when the value of the second pre-coding matrix indicator information is $i_2 \in \{0,1\}$, the value of the second pre-coding matrix indicator information corresponds to the codebook index $2i_2$ in the Rank 1 source codebook, and when the value of the second pre-coding matrix indicator information is $i_1 \in \{2,3\}$, the value of the second pre-coding matrix indicator information corresponds to the codebook index $8 + 2i_2$ in the Rank 1 source codebook; or,

The value of the first pre-coding matrix indicator information $i_1 \in \{0,1,\cdots,7\}$ corresponds to the codebook index $2i_1$ in the Rank 1 source codebook, when the value of the second pre-coding matrix indicator information is $i_2 \in \{0,1\}$, the value of the second pre-coding matrix indicator information corresponds to the codebook index $2i_2$ in the Rank 1 source codebook, and when the value of the second pre-coding matrix indicator information is $i_2 \in \{2,3\}$, the value of the second pre-coding matrix indicator information corresponds to the codebook index $8 + 2i_2$ in the Rank 1 source codebook; or,

The value of the first pre-coding matrix indicator information $i_1 \in \{0,1,\cdots,7\}$ corresponds to the codebook index $\lfloor i_1/2 \rfloor$ in the Rank 1 source codebook, and the value of the second pre-coding matrix indicator information $i_2 \in \{0,1\}$ corresponds to the codebook index $8i_2$ in the Rank 1 source codebook; or,

The value of the first pre-coding matrix indicator information $i_1 \in \{0,1,\cdots,7\}$ corresponds to the codebook index $2i_1$ in the Rank 1 source codebook, and the value of the second pre-coding matrix indicator information $i_2 \in \{0,1\}$ corresponds to the codebook index $8i_2$ in the Rank 1 source codebook; or,

The value of the first pre-coding matrix indicator information $i_1 \in \{0,1,\cdots,15\}$ corresponds to the codebook index $i_1$ in the Rank 1 source codebook, and the value of the second pre-coding matrix indicator information $i_2 = 0$ corresponds to the codebook index $i_2 = 0$ in the Rank 1 source codebook;

Therein, $\lfloor x \rfloor$ represents the greatest integer no greater than $x$.

(2) When the RI value that terminal equipment determines is 2, the above corresponding relationship specifically comprises:

The value of the first pre-coding matrix indicator information $i_1 \in \{0,1,\cdots,7\}$ corresponds to the codebook index $\lfloor i_1/2 \rfloor$ in the Rank 2 source codebook, and the value of the second pre-coding matrix indicator information $i_2 \in \{0,1\}$ corresponds to the codebook index $i_2$ in the Rank 2 source codebook; or,

The value of the first pre-coding matrix indicator information $i_1 \in \{0,1,\cdots,7\}$ corresponds to the codebook index $2i_1$ in the Rank 2 source codebook, and the value of the second pre-coding matrix indicator information $i_2 \in \{0,1\}$ corresponds to the codebook index $i_2$ in the Rank 2 source codebook; or,

The value of the first pre-coding matrix indicator information $i_1 \in \{0,1,\cdots,7\}$ corresponds to the codebook index $\lfloor i_1/2 \rfloor$ in the Rank 2 source codebook, and the value of the second pre-coding matrix indicator information $i_2 \in \{0,1\}$ corresponds to the codebook index $4 + i_2$ in the Rank 2 source codebook; or,

The value of the first pre-coding matrix indicator information $i_1 \in \{0,1,\cdots,7\}$ corresponds to the codebook index $2i_1$ in the Rank 2 source codebook, and the value of the second pre-coding matrix indicator information $i_2 \in \{0,1\}$ corresponds to the codebook index $4 + i_2$ in the Rank 2 source codebook; or,

The value of the first pre-coding matrix indicator information $i_1 \in \{0,1,\cdots 7\}$ corresponds to the codebook index $\lfloor i_1/2 \rfloor$ in the Rank 2 source codebook, and the value of the second pre-coding matrix indicator information $i_2 \in \{0,1\}$ corresponds to the codebook index $4i_2$ in the Rank 2 source codebook; or,

The value of the first pre-coding matrix indicator information $i_1 \in \{0,1,\cdots,7\}$ corresponds to the codebook index $2i_1$ in the Rank 2 source codebook, and the value of the second pre-coding matrix indicator information $i_2 \in \{0,1\}$ corresponds to the codebook index $4i_2$ in the Rank 2 source codebook; or,

The value of the first pre-coding matrix indicator information $i_1 \in \{0,1,\cdots,15\}$ corresponds to the codebook index $i_1$ in the Rank 2 source codebook, and the value of the second pre-coding matrix indicator information $i_1 = 0$ corresponds to the codebook index $i_2 = 0$ in the Rank 2 source codebook; or,

The value of the first pre-coding matrix indicator information $i_1 \in \{0,1,\cdots,15\}$ corresponds to the codebook index $i_1$ in the Rank 2 source codebook, and the value of the second pre-coding matrix indicator information $i_2 = 0$ corresponds to the codebook index $i_2 = 4$ in the Rank 2 source codebook; or,

The value of the first pre-coding matrix indicator information $i_1 \in \{0,1,\cdots,15\}$ corresponds to the codebook index $i_1$ in the Rank 2 source codebook, and the value of the second pre-coding matrix indicator information $i_2 \in \{0,1,2,3\}$ corresponds to the codebook index $2i_2$ in the Rank 2 source codebook; or,

The value of the first pre-coding matrix indicator information $i_1 \in \{0,1,\cdots,7\}$ corresponds to the codebook index $\lfloor i_1/2 \rfloor$ in the Rank 2 source codebook, and the value of the second pre-coding matrix indicator information $i_2 \in \{0,1\}$ corresponds to the codebook index $5i_2$ in the Rank 2 source codebook; or,

The value of the first pre-coding matrix indicator information $i_1 \in \{0,1,\cdots,7\}$ corresponds to the codebook index $2i_1$ in the Rank 2 source codebook, and the value of the second pre-coding matrix indicator information $i_1 \in \{0,1\}$ corresponds to the codebook index $5i_2$ in the Rank 2 source codebook;

Therein, $\lfloor x \rfloor$ represents the greatest integer no greater than $x$.

(3) When the RI value that terminal equipment determines is 3, the above corresponding relationship specifically comprises:

The value of the first pre-coding matrix indicator information $i_1 \in \{0,1,2,3\}$ corresponds to the codebook index $i_1$ in the Rank 3 source codebook, and the value of the second pre-coding matrix indicator information $i_2 \in \{0,1,2,3\}$ corresponds to the codebook index $4i_2$ in the Rank 3 source codebook; or,

The value of the first pre-coding matrix indicator information $i_1 \in \{0,1,2,3\}$ corresponds to the codebook index $i_1$ in the Rank 3 source codebook, and the value of the second pre-coding matrix indicator information $i_2 \in \{0,1,2,3\}$ corresponds to the codebook index $4i_2 + 1$ in the Rank 3 source codebook; or,

The value of the first pre-coding matrix indicator information $i_1 \in \{0,1,2,3\}$ corresponds to the codebook index $i_1$ in the Rank 3 source codebook, and the value of the second pre-coding matrix indicator information $i_1 \in \{0,1,2,3\}$ corresponds to the codebook index $4i_2 + 2$ in the Rank 3 source codebook; or,

The value of the first pre-coding matrix indicator information $i_1 \in \{0,1,2,3\}$ corresponds to the codebook index $i_1$ in the Rank 3 source codebook, and the value of the second pre-coding matrix indicator information $i_1 \in \{0,1,2,3\}$ corresponds to the codebook index $4i_2 + 3$ in the Rank 3 source codebook; or,

The value of the first pre-coding matrix indicator information $i_1 \in \{0,1\}$ corresponds to the codebook index $\lfloor i_1/2 \rfloor$

in the Rank 3 source codebook, and the value of the second pre-coding matrix indicator information $i_2 \in \{0,1,\cdots,7\}$ corresponds to the codebook index $4 \cdot \lfloor i_2/2 \rfloor + (i_2 \bmod 2)$ in the Rank 3 source codebook; or,

The value of the first pre-coding matrix indicator information $i_1 \in \{0,1\}$ corresponds to the codebook index $2i_1$ in the Rank 3 source codebook, and the value of the second pre-coding matrix indicator information $i_2 \in \{0,1,\cdots,7\}$ corresponds to the codebook index $4 \cdot \lfloor i_2/2 \rfloor + (i_2 \bmod 2)$ in the Rank 3 source codebook; or,

The value of the first pre-coding matrix indicator information $i_1 \in \{0,1\}$ corresponds to the codebook index $\lfloor i_1/2 \rfloor$ in the Rank 3 source codebook, and the value of the second pre-coding matrix indicator information $i_2 \in \{0,1,\cdots,7\}$ corresponds to the codebook index $2i_2$ in the Rank 3 source codebook; or,

The value of the first pre-coding matrix indicator information $i_1 \in \{0,1\}$ corresponds to the codebook index $2i_1$ in the Rank 3 source codebook, and the value of the second pre-coding matrix indicator information $i_2 \in \{0,1,\cdots,7\}$ corresponds to the codebook index $2i_2$ in the Rank 3 source codebook; or,

The value of the first pre-coding matrix indicator information $i_1 \in \{0,1\}$ corresponds to the codebook index $\lfloor i_1/2 \rfloor$ in the Rank 3 source codebook, and the value of the second pre-coding matrix indicator information $i_2 \in \{0,1,\cdots,7\}$ corresponds to the codebook index $4 \cdot \lfloor i_2/2 \rfloor + 3 \cdot (i_2 \bmod 2)$ in the Rank 3 source codebook; or,

The value of the first pre-coding matrix indicator information $i_1 \in \{0,1\}$ corresponds to the codebook index $2i_1$ in the Rank 3 source codebook, and the value of the second pre-coding matrix indicator information $i_2 \in \{0,1,\cdots,7\}$ corresponds to the codebook index $4 \cdot \lfloor i_2/2 \rfloor + 3 \cdot (i_2 \bmod 2)$ in the Rank 3 source codebook; or,

The value of the first pre-coding matrix indicator information $i_1 \in \{0,1\}$ corresponds to the codebook index $\lfloor i_1/2 \rfloor$ in the Rank 3 source codebook, and the value of the second pre-coding matrix indicator information $i_2 \in \{0,1,\cdots,7\}$ corresponds to the codebook index $2i_2+1$ in the Rank 3 source codebook; or,

The value of the first pre-coding matrix indicator information $i_1 \in \{0,1\}$ corresponds to the codebook index $2i_1$ in the Rank 3 source codebook, and the value of the second pre-coding matrix indicator information $i_1 \in \{0,1,\cdots,7\}$ corresponds to the codebook index $2i_2+1$ in the Rank 3 source codebook; or,

The value of the first pre-coding matrix indicator information $i_1 \in \{0,1\}$ corresponds to the codebook index $\lfloor i_1/2 \rfloor$ in the Rank 3 source codebook, and the value of the second pre-coding matrix indicator information $i_2 \in \{0,1,\cdots,7\}$ corresponds to the codebook index $8\lfloor i_2/4 \rfloor + i_2$ in the Rank 3 source codebook; or,

The value of the first pre-coding matrix indicator information $i_1 \in \{0,1,\}$ corresponds to the codebook index $2i_1$ in the Rank 3 source codebook, and the value of the second pre-coding matrix indicator information $i_2 \in \{0,1,\cdots,7\}$ corresponds to the codebook index $4\lfloor i_2/4 \rfloor + i_2$ in the Rank 3 source codebook; or,

The value of the first pre-coding matrix indicator information $i_1 \in \{0,1,2,3\}$ corresponds to the codebook index $i_1$ in the Rank 3 source codebook, and the value of the second pre-coding matrix indicator information $i_2 \in \{0,1,2,3\}$ corresponds to the codebook index $i_2$ in the Rank 3 source codebook; or,

The value of the first pre-coding matrix indicator information $i_1 \in \{0,1,2,3\}$ corresponds to the codebook index $i_1$ in the Rank 3 source codebook, and the value of the second pre-coding matrix indicator information $i_2 \in \{0,1,2,3\}$ corresponds to the codebook index $i_2 + 4$ in the Rank 3 source codebook; or,

The value of the first pre-coding matrix indicator information $i_1 \in \{0,1,2,3\}$ corresponds to the codebook index $i_1$ in the Rank 3 source codebook, and the value of the second pre-coding matrix indicator information $i_2 \in \{0,1,2,3\}$ corresponds to the codebook index $i_2 + 8$ in the Rank 3 source codebook; or,

The value of the first pre-coding matrix indicator information $i_1 \in \{0,1,2,3\}$ corresponds to the codebook index $i_1$ in the Rank 3 source codebook, and the value of the second pre-coding matrix indicator information $i_2 \in \{0,1,2,3\}$ corresponds to the codebook index $i_2 + 12$ in the Rank 3 source codebook; or,

The value of the first pre-coding matrix indicator information $i_1 \in \{0,1,2,3\}$ corresponds to the codebook index $i_1$ in the Rank 3 source codebook, and the value of the second pre-coding matrix indicator information $i_2 \in \{0,1,2,3\}$ corresponds to the codebook index $8 \cdot \lfloor i_2/2 \rfloor + (i_2 \bmod 2)$ in the Rank 3 source codebook; or,

The value of the first pre-coding matrix indicator information $i_1 \in \{0,1,2,3\}$ corresponds to the codebook index $i_1$ in the Rank 3 source codebook, and the value of the second pre-coding matrix indicator information $i_2 \in \{0,1,2,3\}$ corresponds to the codebook index $8\cdot\lfloor i_2/2\rfloor+(i_2 \bmod 2) + 2$ in the Rank 3 source codebook;

Therein, $\lfloor x\rfloor$ represents the greatest integer no greater than x and $i$ mod2 represents the remainder of dividing $i$ by 2.

(4)When the RI value that terminal equipment determines is 4, the above corresponding relationship specifically comprises:

The value of the first pre-coding matrix indicator information $i_1 \in \{0,1,2,3\}$ corresponds to the codebook index $i_1$ in the Rank 4 source codebook, and the value of the second pre-coding matrix indicator information $i_2 \in \{0,1,2,3\}$ corresponds to the codebook index $2i_2$ in the Rank 4 source codebook; or,

The value of the first pre-coding matrix indicator information $i_1 \in \{0,1,2,3\}$ corresponds to the codebook index $i_1$ in the Rank 4 source codebook, and the value of the second pre-coding matrix indicator information $i_2 \in \{0,1,2,3\}$ corresponds to the codebook index $4\cdot\lfloor i_2/2\rfloor+3(i_2 \bmod 2)$ in the Rank 4 source codebook; or,

The value of the first pre-coding matrix indicator information $i_1 \in \{0,1,2,3\}$ corresponds to the codebook index $i_1$ in the Rank 4 source codebook, and the value of the second pre-coding matrix indicator information $i_2 \in \{0,1,2,3\}$ corresponds to the codebook index $2 + i_2$ in the Rank 4 source codebook; or,

The value of the first pre-coding matrix indicator information $i_1 \in \{0,1\}$ corresponds to the codebook index $\lfloor i_1/2\rfloor$ in the Rank 4 source codebook, and the value of the second pre-coding matrix indicator information $i_2 \in \{0,1,\cdots,7\}$ corresponds to the codebook index $i_2$ in the Rank 4 source codebook; or,

The value of the first pre-coding matrix indicator information $i_1 \in \{0,1\}$ corresponds to the codebook index $2i_1$ in the Rank 4 source codebook, and the value of the second pre-coding matrix indicator information $i_2 \in \{0,1,\cdots,7\}$ corresponds to the codebook index $i_2$ in the Rank 4 source codebook;

Therein, $\lfloor x\rfloor$ represents the greatest integer no greater than $x$ and $i$ mod2 represents the remainder of dividing $i$ by 2.

To be specific, as for PUCCH reporting mode 1-1 submode2, the relationship of the value of the first pre-coding matrix indicator information and the value of the second pre-coding matrix indicator information with the codebook indexes $i_1$ and $i_2$ can be expressed as:

When the RI is equal to 1, the value of the first pre-coding matrix indicator information $i_1 \in \{0,1,\cdots,7\}$ corresponds to the codebook index $2i_1$ in the Rank 1 source codebook, and the value of the second pre-coding matrix indicator information $i_2 \in \{0,1\}$ corresponds to the codebook index $2i_2$ in the Rank 1 source codebook;

When the RI is equal to 2, the value of the first pre-coding matrix indicator information $i_1 \in \{0,1,\cdots,7\}$ corresponds to the codebook index $2i_1$ in the Rank 2 source codebook, and the value of the second pre-coding matrix indicator information $i_2 \in \{0,1\}$ corresponds to the codebook index $i_2$ in the Rank 2 source codebook;

When the RI is equal to 3, the value of the first pre-coding matrix indicator information $i_1 \in \{0,1\}$ corresponds to the codebook index $2i_1$ in the Rank 3 source codebook, and the value of the second pre-coding matrix indicator information $i_2 \in \{0,1,\cdots,7\}$ corresponds to the codebook index $4\lfloor i_2/4\rfloor+i_2$ in the Rank 3 source codebook;

When the RI is equal to 4, the value of the first pre-coding matrix indicator information $i_1 \in \{0,1\}$ corresponds to the codebook index $2i_1$ in the Rank 4 source codebook, and the value of the second pre-coding matrix indicator information $i_2 \in \{0,1,\cdots,7\}$ corresponds to the codebook index $i_2$ in the Rank 4 source codebook.

As no codebook compression will be required in the case that RI>4, the corresponding relationship of the value of the first pre-coding matrix indicator information and the value of the second pre-coding matrix indicator information with the codebook indexes $i_1$ and $i_2$ without codebook compression can be applied.

Accordingly, as for PUCCH reporting mode 1-1 submode 2 , the relationship of the first PMI value and the second PMI value with the codebook indexes $i_1$ and $i_2$ is shown in Table 14.

Table 14

| RI | The relationship of the first PMI with the codebook index $i_1$ | | The relationship of the second PMI with the codebook index $i_2$ | | Total |
|---|---|---|---|---|---|
| | The first PMI value $I_{PMI1}$ | Codebook index $i_1$ | The second PMI value $I_{PMI2}$ | Codebook index $i_2$ | The number of bits |
| 1 | 0-7 | $2I_{PMI1}$ | 0-1 | $2I_{PMI2}$ | 4 |
| 2 | 0-7 | $2I_{PMI1}$ | 0-1 | $I_{PMI2}$ | 4 |
| 3 | 0-1 | $2I_{PMI1}$ | 0-7 | $4\lfloor I_{PMI2}/4\rfloor+I_{PMI2}$ | 4 |
| 4 | 0-1 | $2I_{PMI1}$ | 0-7 | $I_{PMI2}$ | 4 |
| 5 | 0-3 | $I_{PMI1}$ | 0 | 0 | 2 |
| 6 | 0-3 | $I_{PMI1}$ | 0 | 0 | 2 |
| 7 | 0-3 | $I_{PMI1}$ | 0 | 0 | 2 |
| 8 | 0 | 0 | 0 | 0 | 0 |

To be specific, as for PUCCH reporting mode 2-1, because the value of the first pre-coding matrix indicator information does not require codebook compression, the relationship of the value of the first pre-coding matrix indicator information with the codebook index $i_1$ without codebook compression is applied; the relationship of the value of the second pre-coding matrix indicator information with the codebook index $i_2$ can be expressed as:

When the RI is equal to 2, the value of the first pre-coding matrix indicator information $i_1 \in \{0,1,\cdots,15\}$ corresponds to the codebook index $i_1$ in the Rank 2 source codebook, and the value of the second pre-coding matrix indicator information $i_2 \in \{0,1,2,3\}$ corresponds to the codebook index $2i_2$ in the Rank 2 source codebook;

When the RI is equal to 3, the value of the first pre-coding matrix indicator information $i_1 \in \{0,1,2,3\}$ corresponds to the codebook index $i_1$ in the Rank 3 source codebook, and the value of the second pre-coding matrix indicator information $i_2 \in \{0,1,2,3\}$ corresponds to the codebook index $8\cdot\lfloor i_2/2\rfloor+(i_2 \bmod 2) + 2$ in the Rank 3 source codebook;

When the RI is equal to 4, the value of the first pre-coding matrix indicator information $i_1 \in \{0,1,2,3\}$ corresponds to the codebook index $i_1$ in the Rank 4 source codebook, and the value of the second pre-coding matrix indicator information $i_2 \in \{0,1,2,3\}$ corresponds to the codebook index $2i_2$ in the Rank 4 source codebook;

As no codebook compression will be required in the case that RI=1 and RI>4, the corresponding relationship of the value of the first pre-coding matrix indicator information and the value of the second pre-coding matrix indicator information with the codebook indexes $i_1$ and $i_2$ without codebook compression can be applied.

Accordingly, as for PUCCH reporting mode 2-1, the relationship of the second PMI value with the codebook index $i_2$ is shown in Table 15.

Table 15

| RI | The relationship of the second PMI with the codebook index $i_2$ | |
|---|---|---|
| | The second PMI value $I_{PMI2}$ | Codebook index $i_2$ |
| 1 | 0-15 | $I_{PMI2}$ |
| 2 | 0-3 | $2I_{PMI2}$ |
| 3 | 0-3 | $8\cdot\lfloor I_{PMI2}/2\rfloor + (I_{PMI2} \bmod 2) + 2$ |
| 4 | 0-3 | $2I_{PMI2}$ |
| 5 | 0 | 0 |
| 6 | 0 | 0 |
| 7 | 0 | 0 |

(continued)

| RI | The relationship of the second PMI with the codebook index $i_2$ | |
|---|---|---|
| | The second PMI value $I_{PMI2}$ | Codebook index $i_2$ |
| 8 | 0 | 0 |

Condition II, when the pre-coding matrix indicator information to be determined by the terminal equipment specifically refers to a piece of pre-coding matrix indicator information, the terminal equipment determines the value of the pre-coding matrix indicator information according to the RI value and the preset corresponding relationship of the pre-coding matrix indicator information with the codebook index pair ($i_1$, $i_2$) composed of the two codebook indexes in the source codebook. To be specific, when the RI value that terminal equipment determines is 1, the corresponding relationship in the present condition comprises:

The value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 2\cdot(i \bmod 2)$; or,

The value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 8 + 2\cdot(i \bmod 2)$; or,

The value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = i \bmod 4$; or,

The value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 8 + 2\cdot(i \bmod 4)$;

Therein, $i$ mod2 represents the remainder of dividing $i$ by 2 and $i$ mod4 represents the remainder of dividing $i$ by 4.

Condition III, when the pre-coding matrix indicator information to be determined by the terminal equipment specifically comprises the first pre-coding matrix indicator information and the second pre-coding matrix indicator information, the terminal equipment determines the value of the first pre-coding matrix indicator information and the second pre-coding matrix indicator information according to the RI value and the preset corresponding relationship of the pre-coding matrix indicator information pair composed of the first pre-coding matrix indicator information and the second pre-coding matrix indicator information with the codebook index pair ($i_1$, $i_2$) composed of the two codebook indexes in the source codebook.

Condition IV, when the pre-coding matrix indicator information to be determined by the terminal equipment specifically refers to a piece of pre-coding matrix indicator information, the terminal equipment determines the value of the pre-coding matrix indicator information according to the RI value and the preset corresponding relationship of the pre-coding matrix indicator information and the two codebook indexes $i_1$ and $i_2$ in the source codebook.

There is no need to enumerate specific corresponding relationship rules for condition III and condition IV; all the rules determined in line with above corresponding relationship belong to the scope of the patent protection of the present invention.

It should be noted that, various corresponding relationships mentioned above refer to the description of the corresponding relationship to be applied depending on the RI value. In specific application scene, one or more of the above corresponding relationships can be optionally selected for combination; the adjustment on the technical schemes due to selection difference will not affect the scope of the patent protection of the present invention.

Step S103, the terminal equipment sends the determined RI value and the value of pre-coding matrix indicator information as per the feedback mode to the base station.

The above procedure is the implementation process of the method for transmitting channel state information provided in the embodiments of the present invention at the terminal equipment. The embodiment of the present invention further provides the implementation process of the channel state information receiving method at the base station below; the flow diagram is shown in Fig.2, which comprises the following specific steps:
Step S201, a base station sends a control signaling to the terminal equipment to inform the terminal equipment that channel state information feedback is needed and feedback mode to be used by the channel state information feedback.

Step S202, the base station receives the RI and pre-coding matrix indicator information that terminal equipment reports as per the feedback mode.

Step S203, the base station determines a pre-coding matrix according to the preset corresponding relationship of the pre-coding matrix indicator information with the codebook index in the source codebook according to the received RI value and the value of pre-coding matrix indicator information.

In actual application scene, corresponding to the above-mentioned step S102, the specific implementation process of this step comprises the following four conditions:

Condition I, when the pre-coding matrix indicator information reported by the terminal equipment that base station receives specifically comprises the first pre-coding matrix indicator information and the second pre-coding matrix indicator information, the base station determines a pre-coding matrix according to the RI value and the preset corresponding relationship of the first pre-coding matrix indicator information and the second pre-coding matrix indicator information with the two codebook indexes $i_1$ and $i_2$ in the source codebook.

When the RI value is 1, the base station determines a pre-coding matrix according to the value of the first pre-coding matrix indicator information and the second pre-coding matrix indicator information; the corresponding relationship based on is consistent with (1) in the Condition I of the description of the corresponding relationship in the above-mentioned step S102.

When the RI value is 2, the base station determines a pre-coding matrix according to the value of the first pre-coding matrix indicator information and the second pre-coding matrix indicator information; the corresponding relationship based on is consistent with (2) in the Condition I of the description of the corresponding relationship in the above-mentioned step S102.

When the RI value is 3, the base station determines a pre-coding matrix according to the value of the first pre-coding matrix indicator information and the second pre-coding matrix indicator information; the corresponding relationship based on is consistent with (3) in the Condition I of the description of the corresponding relationship in the above-mentioned step S102.

When the RI value is 4, the base station determines a pre-coding matrix according to the value of the first pre-coding matrix indicator information and the second pre-coding matrix indicator information; the corresponding relationship based on is consistent with (4) in the Condition I of the description of the corresponding relationship in the above-mentioned step S102.

Condition II, when the pre-coding matrix indicator information reported by the terminal equipment that base station receives specifically refers to a piece of pre-coding matrix indicator information, the base station determines a pre-coding matrix according to the RI value and the preset corresponding relationship of the pre-coding matrix indicator information with the codebook index pair ($i_1$, $i_2$) composed of the two codebook indexes in the source codebook.

When the RI value is 1, the base station determines a pre-coding matrix according to the value of the pre-coding matrix indicator information; the corresponding relationship based on is consistent with the Condition II of the description of the corresponding relationship in the above-mentioned step S102.

Condition III, when the pre-coding matrix indicator information reported by the terminal equipment that base station receives specifically comprises the pre-coding matrix indicator information pair composed of the first pre-coding matrix indicator information and the second pre-coding matrix indicator information, the base station determines a pre-coding matrix according to the RI value and the preset corresponding relationship of the pre-coding matrix indicator information pair composed of the first pre-coding matrix indicator information and the second pre-coding matrix indicator

information with the codebook index pair ($i_1$, $i_2$) composed of the two codebook indexes in the source codebook.

Condition IV, when the pre-coding matrix indicator information reported by the terminal equipment that base station receives specifically refers to a pre-coding matrix, the base station determines a pre-coding matrix according to the RI value and the preset corresponding relationship of the pre-coding matrix indicator information with the two codebook indexes $i_1$ and $i_2$ in the source codebook.

Similarly, various corresponding relationships in the above conditions will not be enumerated; all the rules determined in line with the above corresponding relationship belong to the scope of the patent protection of the present invention.

It should be noted that, various corresponding relationships mentioned above refer to the description of the corresponding relationship to be applied depending on the RI value. In specific application scene, one or more of the above corresponding relationships can be optionally selected for combination; the adjustment on the technical schemes due to selection difference will not affect the scope of the patent protection of the present invention.

Compared with the present technology, the embodiments of the present invention possess the following advantages

By applying the technical schemes of the embodiment of the present invention, in a LTE-A system using PUCCH reporting mode 1-1 submode 2 and PUCCH reporting mode 2-1, in a situation where PMI feedback for 8 antenna ports is needed to be reported in a sub-frame and PUCCH capacity is limited, thereforecodebook compression, a corresponding relationship definition of the pre-coding matrix indicator information or the pre-coding matrix indicator information pair and the codebook index or the codebook index pair after code book compression is provided, thus realizing the feedback and receiving of channel state information between a base station and terminal equipment.

In order to implement the technical schemes of the embodiments of the present invention, the embodiments of the present invention further put forward the terminal equipment; the structure diagram thereof is shown in Fig.3, which specifically comprises:

A receiving module 31 for receiving the control signaling sent by base station, the control signaling informs the terminal equipment that channel state information feedback is needed and feedback mode to be used by the channel state information feedback;

A setting module 32 for setting a corresponding relationship of pre-coding matrix indicator information with the codebook index in the source codebook;

A determination module 33 for determining the RI value and pre-coding matrix in the compressed pre-coding matrix set and determining the value of the corresponding pre-coding matrix indicator information according to the RI value and the corresponding relationship of pre-coding matrix indicator information with the codebook index in the source codebook set by the setting module 32;

A sending module 34 for sending the RI value and the value of pre-coding matrix indicator information determined by the determination module 33 to the base station as per the feedback mode informed in the control signaling that receiving module 31 receives.

In specific application scene, the determination module 33 is used for:

determine the RI value and pre-coding matrix in the compressed pre-coding matrix set, and determining the value of the first pre-coding matrix indicator information and the second pre-coding matrix indicator information according to the RI value and the corresponding relationship of the first pre-coding matrix indicator information and the second pre-coding matrix indicator information with the two codebook indexes $i_1$ and $i_2$ in the source codebook set by the setting module 32 when the pre-coding matrix indicator information to be determined specifically comprises the first pre-coding matrix indicator information and the second pre-coding matrix indicator information; or,

determine the RI value and pre-coding matrix in the compressed pre-coding matrix set, and determining the value of the pre-coding matrix indicator information according to the RI value and the corresponding relationship of the pre-coding matrix indicator information with the codebook index pair ($i_1$, $i_2$) composed of the two codebook indexes in the source codebook set by the setting module 32 when the pre-coding matrix indicator information to be determined specifically refers to a piece of pre-coding matrix indicator information; or,

determine the RI value and pre-coding matrix in the compressed pre-coding matrix set, and determining the value of the first pre-coding matrix indicator information and the second pre-coding matrix indicator information according to the RI value and the corresponding relationship of the pre-coding matrix indicator information pair composed of the first pre-coding matrix indicator information and the second pre-coding matrix indicator information with the codebook index pair ($i_1$, $i_2$) composed of the two codebook indexes in the source codebook set by the setting module 32 when the pre-coding matrix indicator information to be determined specifically comprises the first pre-coding matrix indicator information and the second pre-coding matrix indicator information; or,

determine the RI value and pre-coding matrix in the compressed pre-coding matrix set, and determining the value of the pre-coding matrix indicator information according to the RI value and the corresponding relationship of the pre-coding matrix indicator information with the two codebook indexes $i_1$ and $i_2$ in the source codebook set by the setting module 32 when the pre-coding matrix indicator information to be determined specifically refers to a piece of pre-coding matrix indicator information.

Moreover, the embodiments of the present invention further provide the base station; the structure diagram thereof is shown in Fig.4, which comprises:

A setting module 41 for setting a corresponding relationship of pre-coding matrix indicator information with the codebook index in the source codebook;

A sending module 42 for sending control signaling to terminal equipment to inform the terminal equipment that channel state information feedback is needed and feedback mode to be used by the channel state information feedback;

A receiving module 43 for receiving the RI value and the value of pre-coding matrix indicator information that terminal equipment reports as per the feedback mode that sending module 42 informs;

A determination module 44 for determining a pre-coding matrix as per the corresponding relationship of pre-coding matrix indicator information with the codebook index in the source codebook that setting module 41 sets according to the RI value and the value of pre-coding matrix indicator information that receiving module 43 receives.

In specific application scene, the determination module 44 is used for:

determine a pre-coding matrix according to the RI value and the corresponding relationship of the first pre-coding matrix indicator information and the second pre-coding matrix indicator information with the two codebook indexes $i_1$ and $i_2$ in the source codebook set by the setting module 41 when the pre-coding matrix indicator information reported by the terminal equipment that receiving module 43 receives specifically comprises the first pre-coding matrix indicator information and the second pre-coding matrix indicator information; or,

determine a pre-coding matrix according to the RI value and the corresponding relationship of the pre-coding matrix indicator information with the codebook index pair ($i_1$, $i_2$) composed of the two codebook indexes in the source codebook set by the setting module 41 when the pre-coding matrix indicator information reported by the terminal equipment that receiving module 43 receives specifically refers to a piece of pre-coding matrix indicator information; or,

determine a pre-coding matrix according to the RI value and the corresponding relationship of the pre-coding matrix indicator information pair composed of the first pre-coding matrix indicator information and the second pre-coding matrix indicator information with the codebook index pair ($i_1$, $i_2$) composed of the two codebook indexes in the source codebook set by the setting module 41 when the pre-coding matrix indicator information reported by the terminal equipment that receiving module 43 receives specifically comprises the pre-coding matrix indicator information pair composed of the first pre-coding matrix indicator information and the second pre-coding matrix indicator information; or,

determine a pre-coding matrix according to the RI value and the corresponding relationship of the pre-coding matrix indicator information with the two codebook indexes $i_1$ and $i_2$ in the source codebook set by the setting module 41 when the pre-coding matrix indicator information reported by the terminal equipment that receiving module 43 receives specifically refers to a pre-coding matrix.

Compared with the present technology, the embodiments of the present invention possess the following advantages:
By applying the technical schemes of the embodiment of the present invention, in a LTE-A system using PUCCH reporting mode 1-1 submode2 and PUCCH reporting mode 2-1 feedback mode, in a situation where PMI feedback for 8 antenna ports is needed to be reported in a sub-frame and PUCCH capacity is limited, thereforecodebook compression, a corresponding relationship definition of the pre-coding matrix indicator information or the pre-coding matrix indicator information pair and the codebook index or the codebook index pair after code book compression is provided, thus realizing the feedback and receiving of channel state information between a base station and terminal equipment.

Through the description of the embodiments above, the technical personnel in this field can understand clearly that the embodiments of the present invention can be implemented by hardware or software and necessary general hardware platform. Based on this understanding, the technical program of the embodiments of the present invention can be embodied by a form of software products essentially which can be stored in a nonvolatile storage medium (such as CD-ROM, USB flash disk, mobile hard disk drive, etc.), including a number of instructions for making a computer device (such as personal computers, servers, or network equipments, etc.) implement the methods described in the embodiments of the present invention.

The technical personnel in this field can be understood that the illustration is only schematic drawings of a preferred embodiment, and the module or process is not necessary for the implementation of the embodiments of the present invention.

The technical personnel in this field can be understood that the modules can be distributed in device of the embodiments according to the description of the embodiments above, and also can be varied in one or multiply device of the embodiments. The modules of the embodiments can be combined into a module, and also can be further split into several sub-modules.

The number of the embodiments is only to describe, it does not represent the pros and cons of the embodiments.

The descriptions above are just preferred implements ways of the embodiments of the present invention. It should be pointed that, for general technical personnel in this field, some improvement and decorating can be done, within the scope of the present invention as defined by the appended claims.

## Claims

**1.** A method for transmitting channel state information, comprising:

receiving (S101), by a terminal equipment, a control signaling sent by a base station, the control signaling informing the terminal equipment that channel state information feedback is needed and a feedback mode to be used by the channel state information feedback;
determining (S102), by the terminal equipment, a Rank Indication (RI) value and a pre-coding matrix in a compressed pre-coding matrix set, and determining the value of corresponding pre-coding matrix indicator information according to a preset corresponding relationship of the pre-coding matrix indicator information with a codebook index in a source codebook, the pre-coding matrix set being a subset of the source codebook;
sending (S103), by the terminal equipment, the determined RI value and the value of pre-coding matrix indicator information to the base station as per the feedback mode; and
determining, by the terminal equipment, the Rank Indication (RI) value and the pre-coding matrix in a compressed pre-coding matrix set and determining the value of corresponding pre-coding matrix indicator information according to preset corresponding relationship of the pre-coding matrix indicator information with codebook index in source codebook, specifically comprises:
when the pre-coding matrix indicator information to be determined by the terminal equipment specifically refers to a single pre-coding matrix indicator, the terminal equipment determines the value of the pre-coding matrix indicator information according to the RI value and the preset corresponding relationship of the pre-coding matrix indicator information with the codebook index pair ($i_1$, $i_2$) composed of the two codebook indexes in the source codebook;
wherein, when the RI value that terminal equipment determines is 1, the preset corresponding relationship of the pre-coding matrix indicator information with the codebook index pair ($i_1$, $i_2$) composed of the two codebook indexes in the source codebook, which is used by the terminal equipment to determine the value of the pre-coding matrix indicator information, specifically comprises:
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 2\cdot(i \bmod 2)$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 8 + 2\cdot(i \bmod 2)$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = i \bmod 4$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 8 + 2\cdot(i \bmod 4)$;
therein, $i \bmod 2$ represents the remainder of dividing $i$ by 2 and $i \bmod 4$ represents the remainder of dividing $i$ by 4.

**2.** The method of claim 1, wherein the source codebook specifically refers to a codebook for 8 antenna ports in an LTE-A system.

**3.** A terminal equipment, comprising:

a receiving module (31), operable to receive control signaling sent by base station, the control signaling informs the terminal equipment that channel state information feedback is needed and feedback mode to be used by the channel state information feedback;
a setting module (32), operable to set a corresponding relationship of pre-coding matrix indicator information with codebook index in the source codebook;
a determination module (33), operable to determine the RI value and pre-coding matrix in compressed pre-coding matrix set and determining the value of the corresponding pre-coding matrix indicator information according to the RI value and the corresponding relationship of the pre-coding matrix indicator information with the codebook index in the source codebook set by the setting module, the pre-coding matrix set being a subset of the source codebook;
a sending module (35), operable to send the RI value and the value of pre-coding matrix indicator information determined by the determination module to the base station as per the feedback mode informed in the control signaling that receiving module receives;

wherein the determination module is operable to:

determine the RI value and pre-coding matrix in the compressed pre-coding matrix set, and determining the value of the pre-coding matrix indicator information according to the RI value and the corresponding relationship of the pre-coding matrix indicator information with the codebook index pair ($i_1$, $i_2$) composed of the two codebook indexes in the source codebook set by the setting module when the pre-coding matrix indicator information to be determined specifically refers to a single pre-coding matrix indicator;
wherein, when the RI value that terminal equipment determines is 1, the preset corresponding relationship of the pre-coding matrix indicator with the codebook index pair ($i_1$, $i_2$) composed of the two codebook indexes in the source codebook, which is used by the terminal equipment to determine the value of the pre-coding matrix indicator information, specifically comprises:
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 2 \cdot (i\text{mod}2)$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 8 + 2 \cdot (i \bmod 2)$or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = i\text{mod}4$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 8 + 2 \cdot (i\ \text{mod}4)$
therein, $i$ mod 2 represents the remainder of dividing $i$ by 2 and $i$ mod 4 represents the remainder of dividing $i$ by 4.

**4.** The terminal equipment of claim 3, wherein the source codebook specifically refers to a codebook for 8 antenna ports in an LTE-A system.

**5.** A method for transmitting channel state information, comprising:

sending (S201), by a base station, a control signaling to terminal equipment to inform the terminal equipment that channel state information feedback is needed and feedback mode to be used by the channel state information feedback;
receiving (S202), by the base station, RI and pre-coding matrix indicator information that the terminal equipment reports as per the feedback mode;
determining (S203), by the base station, a pre-coding matrix according to preset corresponding relationship of pre-coding matrix indicator information with codebook index in source codebook according to the received RI value and value of the pre-coding matrix indicator information, the pre-coding matrix set being a subset of the source codebook, wherein the determining specifically comprises:
when the pre-coding matrix indicator information reported by the terminal equipment that base station receives specifically refers to a single pre-coding matrix indicator, the base station determines a pre-coding matrix according to the RI value and the preset corresponding relationship of the pre-coding matrix indicator information with the codebook index pair ($i_1$, $i_2$) composed of the two codebook indexes in the source codebook;
wherein, when the RI value reported by the terminal equipment that base station receives is 1, the preset corresponding relationship of the pre-coding matrix indicator information with the codebook index pair ($i_1$, $i_2$) composed of the two codebook indexes in the source codebook, which is used by the base station to determine the pre-coding matrix, specifically comprises:
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 2 \cdot (i \bmod 2)$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 8 + 2 \cdot (i \bmod 2)$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = i \bmod 4$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 8 + 2 \cdot (i \bmod 4)$;
therein, $i$ mod 2 represents the remainder of dividing $i$ by 2 and $i$ mod 4 represents the remainder of dividing $i$ by 4.

**6.** The method of claim 5, wherein the source codebook specifically refers to a codebook for 8 antenna ports in an LTE-A system.

**7.** A base station, comprising:

a setting module (41), operable to set a corresponding relationship of the pre-coding matrix indicator information with the codebook index in the source codebook;
a sending module (42), operable to send control signaling to terminal equipment to inform the terminal equipment that channel state information feedback is needed and feedback mode to be used by the channel state information feedback;
a receiving module (43), operable to receivie RI and pre-coding matrix indicator information that terminal equipment reports as per the feedback mode that the sending module informs;
a determination module (44), operable to determine a pre-coding matrix according to corresponding relationship of pre-coding matrix indicator information with the codebook index in the source codebook that setting module sets according to the RI value and the value of pre-coding matrix indicator information that the receiving module receives, the pre-coding matrix set being a subset of the source codebook;
wherein the determination module operable to:

determine a pre-coding matrix according to the RI value and the corresponding relationship of the pre-coding matrix indicator information with the codebook index pair ($i_1$, $i_2$) composed of the two codebook indexes in the source codebook set by the setting module when the pre-coding matrix indicator information reported by the terminal equipment that receiving module receives specifically refers to a single pre-coding matrix indicator;
wherein, when the RI value that terminal equipment determines is 1, the preset corresponding relationship of the pre-coding matrix indicator with the codebook index pair ($i_1$, $i_2$) composed of the two codebook indexes in the source codebook, which is used by the terminal equipment to determine the value of the pre-coding matrix indicator information, specifically comprises:
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 2 \cdot (i \bmod 2)$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 8 + 2 \cdot (i \bmod 2)$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = i \bmod 4$; or,
the value of the pre-coding matrix indicator information $i \in \{0,1,\cdots,15\}$ corresponds to the codebook index pair ($i_1$, $i_2$) in the Rank 1 source codebook, therein, $i_1 = i$ and $i_2 = 8 + 2 \cdot (i \bmod 4)$;
therein, $i$ mod 2 represents the remainder of dividing $i$ by 2 and $i$ mod4 represents the remainder of dividing $i$ by 4.

**8.** The base station of claim 7, wherein the source codebook specifically refers to a codebook for 8 antenna ports in an LTE-A system.

## Patentansprüche

**1.** Verfahren zum Übertragen von Kanalzustandsinformationen, umfassend:

Empfangen (S101) eines von einer Basisstation gesendeten Steuersignals an einem Endgerät, wobei das Steuersignal das Endgerät darüber informiert, dass eine Kanalzustandsinformationsrückmeldung erforderlich ist und eines Rückmeldungsmodus zur Verwendung von der Kanalzustandsinformationsrückmeldung;
Ermitteln (S102) eines Ranganzeigewertes (RI-Wertes) und einer Vorcodierungsmatrix in einem komprimierten Vorcodierungsmatrixsatz und Ermitteln des Wertes der entsprechenden Vorcodierungsmatrixindikatorinformationen gemäß einer voreingestellten entsprechenden Beziehung der Vorcodierungsmatrixindikatorinformationen zu einem Codebuchindex in einem Quellcodebuch durch das Endgerät, wobei der Vorcodierungsmatrixsatz ein Teilsatz des Quellcodebuchs ist;
Senden (S103) des ermittelten RI-Wertes und des Wertes der Vorcodierungsmatrixindikatorinformationen von dem Endgerät an die Basisstation gemäß dem Rückmeldungsmodus; und
wobei das Ermitteln des Ranganzeigewertes (RI-Wertes) und der Vorcodierungsmatrix in einem komprimierten Vorcodierungsmatrixsatz und das Ermitteln des Wertes der entsprechenden Vorcodierungsmatrixindikatorinformationen gemäß einer voreingestellten entsprechenden Beziehung der Vorcodierungsmatrixindikatorinformationen zu dem Codebuchindex im Quellcodebuch durch das Endgerät insbesondere Folgendes umfasst:
wenn die durch das Endgerät zu ermittelnden Vorcodierungsmatrixindikatorinformationen sich insbesondere auf einen einzelnen Vorcodiermatrixindikator beziehen, ermittelt das Endgerät den Wert der Vorcodiermatrixindikatorinformationen gemäß dem RI-Wert und der voreingestellten entsprechenden Beziehung der Vorcodierungsmatrixindikatorinformationen zu dem Codebuchindexpaar ($i_1$, $i_2$), das sich aus den zwei Codebuchindizes in dem Quellcodebuch zusammensetzt;
wobei die voreingestellte entsprechende Beziehung der Vorcodierungsmatrixindikatorinformationen zu dem Codebuchindexpaar ($i_1$, $i_2$), das sich aus den zwei Codebuchindizes in dem Quellcodebuch zusammensetzt, das vom Endgerät dazu verwendet wird, den Wert der Vorcodierungsmatrixindikatorinformationen zu ermitteln, insbesondere Folgendes umfasst, wenn der RI-Wert, den das Endgerät ermittelt, 1 ist:
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 2\cdot(i\text{mod}2)$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 8 + 2\cdot(i\text{mod}2)$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = i\text{mod}4$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 8 + 2\cdot(i\text{mod}4)$;
wobei $i$mod2 für den Rest der Division $i$ durch 2 und $i$mod4 für den Rest der Division $i$ durch 4 steht.

**2.** Verfahren nach Anspruch 1, wobei sich das Quellcodebuch insbesondere auf ein Codebuch für 8 Antennenanschlüsse in einem LTE-A-System bezieht.

**3.** Endgerät, umfassend:

ein Empfangsmodul (31), das dazu betreibbar ist, Steuersignale, die von einer Basisstation gesendet wurden, wobei das Steuersignal das Endgerät darüber informiert, dass eine Kanalzustandsinformationsrückmeldung erforderlich ist, und einen Rückmeldungsmodus zur Verwendung von der Kanalzustandsinformationsrückmeldung zu empfangen;
ein Einstellmodul (32), das dazu betreibbar ist, eine entsprechende Beziehung von Vorcodierungsmatrixindikatorinformationen zu dem Codebuchindex in dem Quellcodebuch einzustellen;
ein Ermittlungsmodul (33), das dazu betreibbar ist, den RI-Wert und die Vorcodierungsmatrix in einem komprimierten Vorcodierungsmatrixsatz zu ermitteln und den Wert der entsprechenden Vorcodierungsmatrixindikatorinformation gemäß dem RI-Wert und der entsprechenden Beziehung der Vorcodierungsmatrixindikatorinformationen zu dem Codebuchindex in dem Quellcodebuch zu ermitteln, das durch das Einstellmodul eingestellt wurde, wobei der Vorcodierungsmatrixsatz ein Teilsatz des Quellcodebuchs ist;
ein Sendemodul (35), das dazu betreibbar ist, den RI-Wert und den Wert der Vorcodierungsmatrixindikatorinformationen, die von dem Ermittlungsmodul ermittelt wurden, gemäß dem Rückmeldungsmodus, der in dem Steuersignal mitgeteilt wurde, das das Empfangsmodul empfängt, an die Basisstation zu senden;
wobei das Ermittlungsmodul dazu betreibbar ist:

den RI-Wert und die Vorcodierungsmatrix in dem komprimierten Vorcodierungsmatrixsatz zu ermitteln, wobei der Wert der Vorcodierungsmatrixindikatorinformationen gemäß dem RI-Wert und der entsprechenden Beziehung der Vorcodierungsmatrixindikatorinformation zu dem Codebuchindexpaar ($i_1$, $i_2$) ermittelt wird, das sich aus den zwei Codebuchindizes in dem Quellcodebuch zusammensetzt, das durch das Einstellmodul eingestellt wurde, wenn sich die zu ermittelnden Vorcodierungsmatrixindikatorinformationen insbesondere auf einen einzigen Vorcodierungsmatrixindikator beziehen;
wobei die voreingestellte entsprechende Beziehung des Vorcodierungsmatrixindikators zu dem Codebuchindexpaar ($i_1$, $i_2$), das sich aus den zwei Codebuchindizes in dem Quellcodebuch zusammensetzt, das von dem Endgerät dazu verwendet wird, den Wert der Vorcodierungsmatrixindikatorinformationen zu ermitteln, insbesondere Folgendes umfasst, wenn der RI-Wert, den das Endgerät ermittelt, 1 ist:
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 2\cdot(i\text{mod}2)$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 8 + 2\cdot(i\text{mod}2)$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = i\text{mod}4$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2= 8 + 2\cdot(i\text{mod}4)$;
wobei $i$mod2 für den Rest der Division $i$ durch 2 und $i$mod4 für den Rest der Division $i$ durch 4 steht.

**4.** Endgerät nach Anspruch 3, wobei sich das Quellcodebuch insbesondere auf ein Codebuch für 8 Antennenanschlüsse in einem LTE-A-System bezieht.

**5.** Verfahren zum Übertragen von Kanalzustandsinformationen, umfassend:

Senden (S201) eines Steuersignals von einer Basisstation an ein Endgerät, um das Endgerät darüber zu informieren, dass eine Kanalzustandsinformationsrückmeldung erforderlich ist, und eines Rückmeldungsmodus zur Verwendung durch die Kanalzustandsinformationsrückmeldung;
Empfangen (S202) von RI und Vorcodierungsmatrixindikatorinformationen, die das Endgerät gemäß dem Rückmeldungsmodus meldet, an der Basisstation;
Ermitteln (S203) einer Vorcodierungsmatrix gemäß der voreingestellten entsprechenden Beziehung der Vorcodierungsmatrixindikatorinformationen zu dem Codebuchindex in dem Quellcodebuch gemäß dem empfangenen RI-Wert und dem Wert der Vorcodierungsmatrixindikatorinformationen durch die Basisstation, wobei der Vorcodierungsmatrixsatz ein Teilsatz des Quellcodebuchs ist, wobei das Ermitteln insbesondere Folgendes umfasst:
wenn sich die durch das Endgerät gemeldeten Vorcodierungsmatrixindikatorinformationen, die die Basisstation empfängt, insbesondere auf einen einzelnen Vorcodiermatrixindikator beziehen, ermittelt die Basisstation eine Vorcodiermatrix gemäß dem RI-Wert und der voreingestellten entsprechenden Beziehung der Vorcodierungsmatrixindikatorinformationen zu dem Codebuchindexpaar ($i_1$, $i_2$), das sich aus den zwei Codebuchindizes in dem Quellcodebuch zusammensetzt;
wobei die voreingestellte entsprechende Beziehung der Vorcodierungsmatrixindikatorinformationen zu dem Codebuchindexpaar ($i_1$, $i_2$), das sich aus den zwei Codebuchindizes in dem Quellcodebuch zusammensetzt, das von der Basisstation dazu verwendet wird, die Vorcodierungsmatrix zu ermitteln, insbesondere Folgendes umfasst, wenn der von dem Endgerät gemeldete RI-Wert, den die Basisstation empfängt, 1 ist:
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 2 \cdot (i \bmod 2)$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 8 + 2 \cdot (i \bmod 2)$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = i \bmod 4$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 8 + 2 \cdot (i \bmod 4)$;
wobei $i$mod2 für den Rest der Division $i$ durch 2 und $i$mod4 für den Rest der Division $i$ durch 4 steht.

**6.** Verfahren nach Anspruch 5, wobei sich das Quellcodebuch insbesondere auf ein Codebuch für 8 Antennenanschlüsse in einem LTE-A-System bezieht.

**7.** Basisstation, umfassend:

ein Einstellmodul (41), das dazu betreibbar ist, eine entsprechende Beziehung der Vorcodierungsmatrixindikatorinformationen zu dem Codebuchindex in dem Quellcodebuch einzustellen;
ein Sendemodul (42), das dazu betreibbar ist, an ein Endgerät Steuersignale, um das Endgerät darüber zu informieren, dass eine Kanalzustandsinformationsrückmeldung erforderlich ist, und den Rückmeldungsmodus zur Verwendung durch die Kanalzustandsinformationsrückmeldung zu senden;
ein Empfangsmodul (43), das dazu betreibbar ist, RI und Vorcodierungsmatrixindikatorinformationen zu empfangen, die das Endgerät gemäß dem Rückmeldungsmodus meldet, den das Sendemodul mitteilt;
ein Ermittlungsmodul (44), das dazu betreibbar ist, eine Vorcodierungsmatrix gemäß einer entsprechenden Beziehung der Vorcodierungsmatrixindikatorinformationen zu dem Codebuchindex in dem Quellcodebuch zu ermitteln, das das Einstellmodul gemäß dem RI-Wert und dem Wert der Vorcodierungsmatrixindikatorinformationen einstellt, die das Empfangsmodul empfängt, wobei der Vorcodierungsmatrixsatz ein Teilsatz des Quellcodebuches ist;
wobei das Ermittlungsmodul dazu betreibbar ist:

eine Vorcodierungsmatrix gemäß dem RI-Wert und der entsprechenden Beziehung der Vorcodierungsmatrixindikatorinformationen zu dem Codebuchindexpaar ($i_1$, $i_2$) zu ermitteln, das sich aus den zwei Codebuchindizes in dem Quellcodebuch zusammensetzt, das durch das Einstellmodul eingestellt wurde, wenn sich die Vorcodierungsmatrixindikatorinformationen, die von dem Endgerät gemeldet wird, das das Empfangsmodul empfängt, insbesondere auf einen einzigen Vorcodierungsmatrixindikator beziehen;
wobei die voreingestellte entsprechende Beziehung des Vorcodierungsmatrixindikators zu dem Codebu-

chindexpaar ($i_1$, $i_2$), das sich aus den zwei Codebuchindizes in dem Quellcodebuch zusammensetzt, das vom Endgerät dazu verwendet wird, den Wert der Vorcodierungsmatrixindikatorinformationen zu ermitteln, insbesondere Folgendes umfasst, wenn der RI-Wert, den das Endgerät ermittelt, 1 ist:
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 2\cdot(i\text{mod}2)$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 8+2\cdot(i\text{mod}2)$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = i\text{mod}4$; oder
der Wert der Vorcodierungsmatrixindikatorinformationen $i \in \{0,1,\cdots,15\}$ entspricht dem Codebookindexpaar ($i_1$, $i_2$) im Quellcodebuch auf Rang 1, wobei gilt: $i_1 = i$ und $i_2 = 8 + 2\cdot(i\text{mod}4)$;
wobei $i$mod2 für den Rest der Division $i$ durch 2 und $i$mod4 für den Rest der Division $i$ durch 4 steht.

**8.** Basisstation nach Anspruch 7, wobei sich das Quellcodebuch insbesondere auf ein Codebuch für 8 Antennenanschlüsse in einem LTE-A-System bezieht.

**Revendications**

**1.** Procédé de transmission d'informations d'état de canal comprenant :

la réception (S101), par un équipement terminal, d'une signalisation de commande envoyée par une station de base, la signalisation de commande informant l'équipement terminal qu'un retour d'informations d'état de canal est requis et d'un mode de retour devant être utilisé par le retour d'informations d'état de canal ;
la détermination (S102), par l'équipement terminal, d'une valeur d'indication de rang (RI) et d'une matrice de pré-codage dans un ensemble de matrices de pré-codage compressé et la détermination de la valeur des informations d'indicateur de matrice de pré-codage correspondantes conformément à une relation correspondante prédéfinie des informations d'indicateur de matrice de pré-codage avec un index de livre de codes dans un livre de codes source, l'ensemble de matrices de pré-codage étant un sous-ensemble du livre de codes source ;
l'envoi (S103), par l'équipement terminal, de la valeur RI déterminée et de la valeur des informations d'indicateur de matrice de pré-codage à la station de base conformément au mode de retour ; et
la détermination, par l'équipement terminal, de la valeur d'indication de rang (RI) et de la matrice de pré-codage dans un ensemble de matrices de pré-codage compressé et la détermination de la valeur des informations d'indicateur de matrice de pré-codage correspondantes en fonction de la relation correspondante prédéfinie des informations d'indicateur de matrice de pré-codage avec un index de livre de codes dans le livre de codes source comprend spécifiquement :
lorsque les informations d'indicateur de matrice de pré-codage à déterminer par l'équipement terminal font spécifiquement référence à un seul indicateur de matrice de pré-codage, l'équipement terminal détermine la valeur des informations d'indicateur de matrice de pré-codage en fonction de la valeur RI et de la relation correspondante prédéfinie des informations d'indicateur de matrice de pré-codage avec la paire d'index de livre de codes ($i_1$, $i_2$) composée des deux index de livre de codes dans le livre de codes source ;
dans lequel, lorsque la valeur RI est déterminée par l'équipement terminal comme égale à 1, la relation correspondante prédéfinie des informations d'indicateur de matrice de pré-codage avec la paire d'index de livre de codes ($i_1$, $i_2$) composée des deux index de livre de codes dans le livre de codes source, qui est utilisé par l'équipement terminal pour déterminer la valeur des informations d'indicateur de matrice de pré-codage, comprend spécifiquement :
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=$2\cdot(i\text{mod}2)$; ou
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=$8+2\cdot(i\text{mod}2)$ ; ou
la valeur des informations d'indicateur de matrice de pré-codage $i \in \{0,1,\cdots, 15\}$ correspond à la paire d'index de livre de codes ($i_1$, $i_2$) dans le livre de codes source de rang 1, où $i_1$=$i$ et $i_2$=$i\text{mod}4$ ; ou
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=$8+2\cdot(i\text{mod}4)$ ;
où $i$mod2 représente le reste de la division de $i$ par 2 et $i$mod4 représente le reste de la division de $i$ par 4.

**2.** Procédé selon la revendication 1, dans lequel le livre de codes source fait spécifiquement référence à un livre de codes pour 8 ports d'antenne dans un système LTE-A.

3. Équipement terminal comprenant :

un module de réception (31), utilisable pour recevoir une signalisation de commande envoyée par la station de base, la signalisation de commande informe l'équipement terminal qu'un retour d'informations d'état de canal est nécessaire et le mode de retour à utiliser par le retour d'informations d'état de canal ;
un module de réglage (32), utilisable pour régler une relation correspondante d'informations d'indicateur de matrice de pré-codage avec un index de livre de codes dans le livre de codes source ;
un module de détermination (33), utilisable pour déterminer la valeur RI et la matrice de pré-codage dans un ensemble de matrices de pré-codage compressé et déterminer la valeur des informations d'indicateur de matrice de pré-codage correspondantes en fonction de la valeur RI et de la relation correspondante des informations d'indicateur de matrice de pré-codage avec l'index du livre de codes dans le livre de codes source réglé par le module de réglage, l'ensemble de matrices de pré-codage étant un sous-ensemble du livre de codes source ;
un module d'envoi (35), utilisable pour envoyer la valeur RI et la valeur des informations d'indicateur de matrice de pré-codage déterminées par le module de détermination à la station de base conformément au mode de retour renseigné dans la signalisation de commande que le module de réception reçoit ;
dans lequel le module de détermination est utilisable pour :

déterminer la valeur RI et la matrice de pré-codage dans l'ensemble de matrices de pré-codage compressé et déterminer la valeur des informations d'indicateur de matrice de pré-codage en fonction de la valeur RI et de la relation correspondante des informations d'indicateur de matrice de pré-codage et de la paire d'index de livre de codes ($i_1$, $i_2$) composée des deux index de livre de codes dans le livre de codes source réglé par le module de réglage lorsque les informations d'indicateur de matrice de pré-codage à déterminer se réfèrent spécifiquement à un indicateur de matrice de pré-codage unique ;
dans lequel, lorsque la valeur RI est déterminée par l'équipement terminal comme étant égale à 1, la relation correspondante prédéfinie de l'indicateur de matrice de pré-codage avec la paire d'index de livre de codes ($i_1$, $i_2$) composée des deux index de livre de codes dans le livre de codes source, qui est utilisé par l'équipement terminal pour déterminer la valeur des informations d'indicateur de matrice de pré-codage, comprend spécifiquement :
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=2·($i$mod2) ; ou
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=8+2·($i$mod2) ; ou
la valeur des informations d'indicateur de matrice de pré-codage $i \in \{0,1,\cdots 15\}$ correspond à la paire d'index de livre de codes ($i_1$, $i_2$) dans le livre de codes source de rang 1, où $i_1$=$i$ et $i_2$=$i$mod4 ; ou
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=8+2·($i$mod4) ;
où $i$mod2 représente le reste de la division de $i$ par 2 et $i$mod4 représente le reste de la division de $i$ par 4.

4. Équipement terminal selon la revendication 3, dans lequel le livre de codes source fait spécifiquement référence à un livre de codes pour 8 ports d'antenne dans un système LTE-A.

5. Procédé de transmission d'informations d'état de canal comprenant :

l'envoi (S201), par une station de base, d'une signalisation de commande à un équipement terminal pour informer l'équipement terminal qu'un retour d'informations d'état de canal est nécessaire et du mode de retour à utiliser par le retour d'informations d'état de canal ;
la réception (S202), par la station de base, d'informations RI et d'informations d'indicateur de matrice de pré-codage que l'équipement terminal rapporte conformément au mode de retour ;
la détermination (S203), par la station de base, d'une matrice de pré-codage en fonction de la relation correspondante prédéfinie d'informations d'indicateur de matrice de pré-codage avec un index de livre de codes dans le livre de codes source en fonction de la valeur RI et de la valeur des informations d'indicateur de matrice de pré-codage reçues, l'ensemble de matrices de pré-codage étant un sous-ensemble du livre de codes source, dans lequel la détermination comprend spécifiquement :
lorsque les informations d'indicateur de matrice de pré-codage rapportées par l'équipement terminal et que la station de base reçoit se réfèrent spécifiquement à un seul indicateur de matrice de pré-codage, la station de base détermine une matrice de pré-codage en fonction de la valeur RI et de la relation correspondante prédéfinie des informations d'indicateur de matrice de pré-codage avec la paire d'index de livre de codes ($i_1$, $i_2$) composée des deux index de livre de codes du livre de codes source ;
dans lequel, lorsque la valeur RI rapportée par l'équipement terminal et que la station de base reçoit est égale à 1, la relation correspondante prédéfinie des informations d'indicateur de matrice de pré-codage avec la paire d'index de livre de codes ($i_1$, $i_2$) composée des deux index de livre de codes dans livre de codes source, qui est utilisé par la station de base pour déterminer la matrice de pré-codage, comprend spécifiquement :
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=2·($i$mod2) ; ou
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=8+2·($i$mod2) ou
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=$i$mod4 ; ou
la valeur des informations d'indicateur de matrice de pré-codage $i \in \{0,1,\cdots 15\}$ correspond à la paire d'index de livre de codes ($i_1$, $i_2$) dans le livre de codes source de rang 1, où $i_1$=$i$ et $i_2$=8+2·($i$mod4) ;
où $i$mod2 représente le reste de la division de $i$ par 2 et $i$mod4 représente le reste de la division de $i$ par 4.

**6.** Procédé selon la revendication 5, dans lequel le livre de codes source fait spécifiquement référence à un livre de codes pour 8 ports d'antenne dans un système LTE-A.

**7.** Station de base comprenant :

un module de réglage (41), utilisable pour régler une relation correspondante des informations d'indicateur de matrice de pré-codage avec l'index du livre de codes dans le livre de codes source ;
un module d'envoi (42), utilisable pour envoyer une signalisation de commande à un équipement terminal afin d'informer l'équipement terminal du fait qu'un retour d'informations sur l'état du canal est nécessaire et du mode de retour à utiliser par le retour d'informations sur l'état du canal ;
un module de réception (43), utilisable pour recevoir une RI et des informations d'indicateur de matrice de pré-codage que l'équipement terminal rapporte selon le mode de retour que le module d'envoi indique ;
un module de détermination (44) utilisable pour déterminer une matrice de pré-codage en fonction d'une relation correspondante entre des informations d'indicateur de matrice de pré-codage et l'index de livre de codes dans le livre de codes source que le module de réglage règle en fonction de la valeur RI et de la valeur des informations d'indicateur de matrice de pré-codage que le module de réception reçoit, l'ensemble de matrices de pré-codage étant un sous-ensemble du livre de codes source ;
dans laquelle le module de détermination est utilisable pour :

déterminer une matrice de pré-codage en fonction de la valeur RI et de la relation correspondante des informations d'indicateur de matrice de pré-codage avec la paire d'index de livre de codes ($i_1$, $i_2$) composée des deux index de livre de codes dans le livre de codes source réglé par le module de réglage lorsque les informations d'indicateur de matrice de pré-codage rapportées par l'équipement terminal que le module de réception reçoit font spécifiquement référence à un seul indicateur de matrice de pré-codage ;
dans laquelle, lorsque la valeur RI que détermine l'équipement terminal est 1, la relation correspondante prédéfinie de l'indicateur de matrice de pré-codage avec la paire d'index de livre de codes ($i_1$, $i_2$) composée des deux index de livre de codes dans le livre de codes source, qui est utilisé par l'équipement terminal pour déterminer la valeur des informations d'indicateur de matrice de pré-codage, comprend spécifiquement :
la valeur des informations d'indicateur de matrice de pré-codage $i \in \{0,1,\cdots 15\}$ correspond à la paire d'index de livre de codes ($i_1$, $i_2$) dans le livre de codes source de rang 1, où $i_1$=$i$ et $i_2$=2·($i$mod2) ; ou
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=8+2·($i$mod2) ; ou
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=$i$ et $i_2$=$i$mod4 ; ou
la valeur des informations d'indicateur de matrice de pré-codage $i \in \{0,1,\cdots,15\}$ correspond à la paire d'index de livre de codes ($i_1$, $i_2$) dans le livre de codes source de rang 1, où $i_1$=i et $i_2$=8+2·($i$mod4) ;
où $i$mod2 représente le reste de la division de $i$ par 2 et $i$mod4 représente le reste de la division de $i$ par 4.

**8.** Station de base selon la revendication 7, dans laquelle le livre de codes source fait spécifiquement référence à un livre de codes pour 8 ports d'antenne dans un système LTE-A.

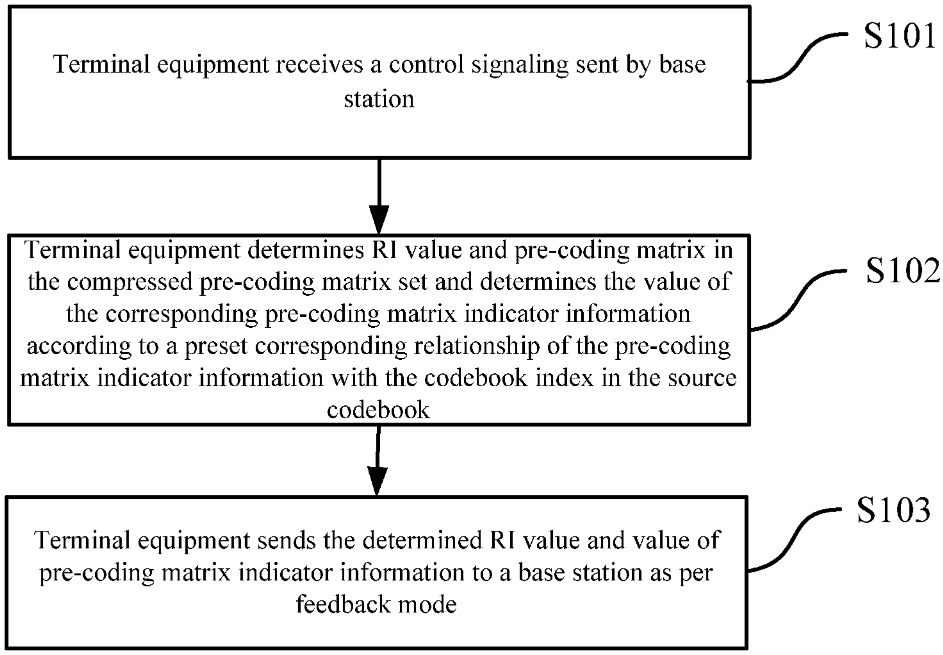
Terminal equipment receives a control signaling sent by base station
S101
Terminal equipment determines RI value and pre-coding matrix in the compressed pre-coding matrix set and determines the value of the corresponding pre-coding matrix indicator information according to a preset corresponding relationship of the pre-coding matrix indicator information with the codebook index in the source codebook
S102
Terminal equipment sends the determined RI value and value of pre-coding matrix indicator information to a base station as per feedback mode
S103

Figure 1

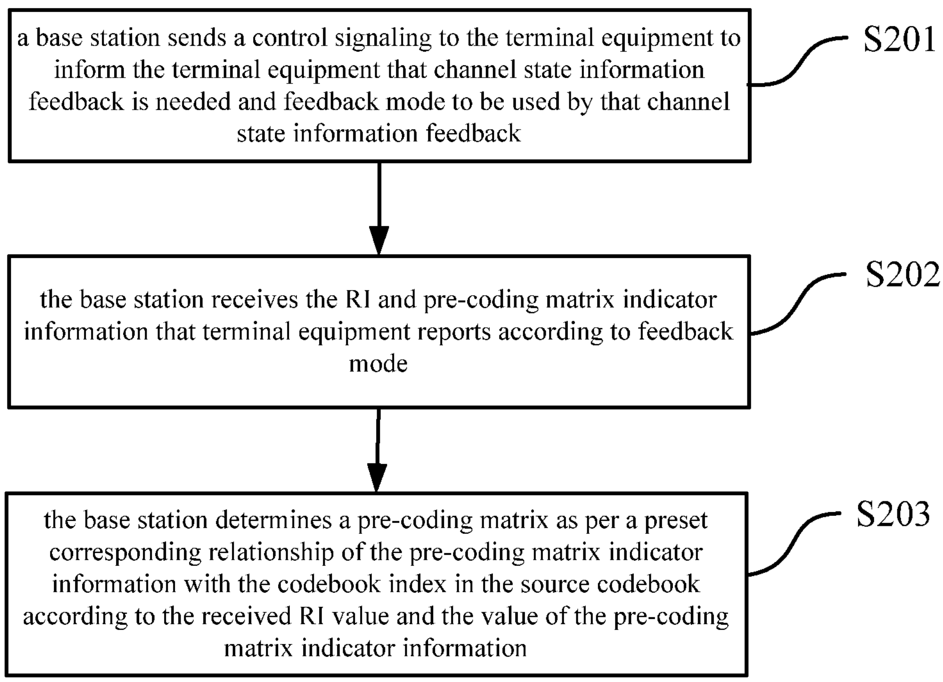
a base station sends a control signaling to the terminal equipment to inform the terminal equipment that channel state information feedback is needed and feedback mode to be used by that channel state information feedback
S201
the base station receives the RI and pre-coding matrix indicator information that terminal equipment reports according to feedback mode
S202
the base station determines a pre-coding matrix as per a preset corresponding relationship of the pre-coding matrix indicator information with the codebook index in the source codebook according to the received RI value and the value of the pre-coding matrix indicator information
S203

Figure 2

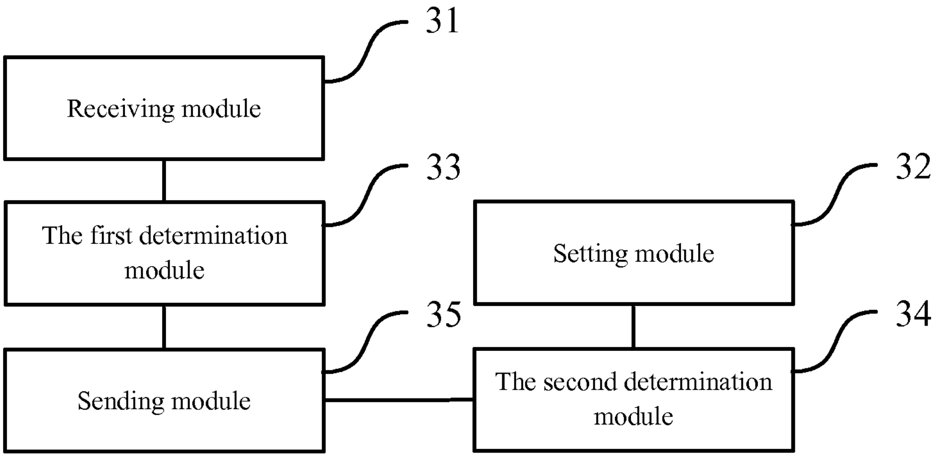


Figure 3

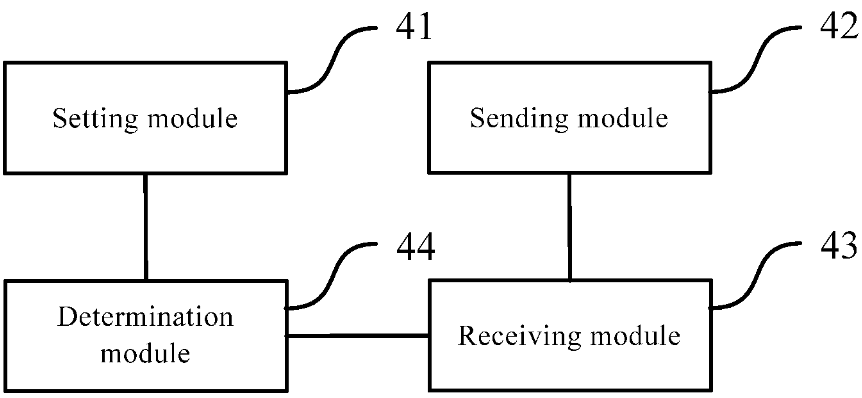


Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Down-sampling C1 and/or C2 for PUCCH Mode 1-1 in Rel.10. **HUAWEI et al.** 3GPP DRAFT; R1-105249 DOWNSAMPLING C1 AND C2 FOR PUCCH 1-1, 3RD GENERATION PARTNERSHIP PROJECT (3GPP). MOBILE COMPETENCE CENTRE, 05 October 2010
- Subsampling of 8Tx codebooks. **CATT.** 3GPP DRAFT; R1-105165, 3RD GENERATION PARTNERSHIP PROJECT (3GPP). MOBILE COMPETENCE CENTRE, 05 October 2010
- Further Discussion on CSI Reporting mode. **ZTE.** 3GPP DRAFT; R1_105449_V4, 3RD GENERATION PARTNERSHIP PROJECT (3GPP). MOBILE COMPETENCE CENTRE, 14 October 2010